(19) Europäisches Patentamt / European Patent Office / Office européen des brevets

(11) **EP 2 551 614 B1**

(12) **EUROPEAN PATENT SPECIFICATION**

(45) Date of publication and mention
of the grant of the patent:
**01.05.2019   Bulletin 2019/18**

(51) Int Cl.:
*F25B 13/00* *(2006.01)*     *F25B 49/02* *(2006.01)*

(21) Application number: **12161188.3**

(22) Date of filing: **26.03.2012**

(54) **Air Conditioner and Control Method Thereof**

Klimaanlage und Steuerverfahren dafür

Climatiseur et son procédé de commande

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2011   KR 20110074090**

(43) Date of publication of application:
**30.01.2013   Bulletin 2013/05**

(73) Proprietor: **Samsung Electronics Co., Ltd.
Gyeonggi-do 16677 (KR)**

(72) Inventors:
• **Son, Kil Soo**
  **Gyeonggi-do (KR)**
• **Park, Seung Jun**
  **Gyeonggi-do (KR)**
• **Kim, Jong Woon**
  **Gyeonggi-do (KR)**
• **Jun, Hong Seok**
  **Gyeonggi-do (KR)**

(74) Representative: **Taor, Simon Edward William et al
Venner Shipley LLP
200 Aldersgate
London EC1A 4HD (GB)**

(56) References cited:
EP-A2- 0 282 772     EP-A2- 0 692 683
EP-A2- 1 091 178     GB-A- 2 251 959
JP-A- H11 108 423

**Description**

Embodiments of the present invention relate to an air conditioner and a control method thereof, which enable adjustment in the quantity of refrigerant to be fed from an inverter type compressor to a plurality of indoor units respectively.

Generally, an air conditioner is an apparatus that controls the air in an indoor space by cooling, heating or purifying the air via movement of heat generated via evaporation and condensation of refrigerant and discharging the resulting air into the indoor space.

EP1091178 discloses a multiroom air conditioner. The multi-room air conditioner includes one outdoor unit and a plurality of indoor units connected to the outdoor unit. In each indoor unit, the target control temperature is set and stored. Of the target control temperatures of the individual indoor units, in order to set the highest target control temperature at the control piping temperature, a control piping setting circuit is provided. The capacity of the compressor is controlled by comparing the control piping temperature and the piping temperature of the indoor unit adopted as the control piping temperature.

In an example, the air conditioner controls indoor air to a low temperature in a cooling mode in summer and to a high temperature in a heating mode in winter. Additionally, the air conditioner controls the humidity and purity of indoor air to produce purified air of an appropriate temperature.

Such an air conditioner includes an indoor unit, which is installed in an indoor space to discharge cool or warm air into the indoor space, and an outdoor unit which is installed at an outdoor area and connected to the indoor unit to supply refrigerant into the indoor unit. The air conditioner may further include a controller, which is electrically connected to the indoor unit to enable remote control of the operation of the indoor unit.

The outdoor unit includes a compressor to generate high-temperature and high-pressure refrigerant, an outdoor heat exchanger to perform heat-exchange between refrigerant and outside air via circulation of the refrigerant, and an expansion valve to depressurize the refrigerant. When performing both heating and cooling operations, the outdoor unit further includes a 4-way valve to switch between a cooling cycle and a heating cycle.

The compressor usable with the air conditioner may be of a constant-speed type, Twin Power System (TPS) (Twin Compressor System (TCS) or Tandem) type, or inverter type.

The constant-speed type compressor always maintains a completely constant rotating speed to obtain a constant cooling output and is switched on or off based on a difference between an indoor temperature and a target temperature so as to control an indoor temperature. This constant-speed type compressor may need an initial starting current greater than an operating current, which causes considerable power loss and efficiency deterioration.

The TPS type compressor employs two different capacities of compressors such that one compressor or two compressors are driven based on a difference between an indoor temperature and a target temperature so as to control the indoor temperature.

In the TPS type compressor, since the two compressors are simultaneously driven in an initial operating stage, cooling may be performed within a short time. Also, the indoor temperature maybe controlled using only one compressor, which enables reduction of power consumption.

The inverter type compressor is a compressor having the greatest energy saving effects. Through use of an inverter that converts DC to a desired AC frequency, the inverter type compressor may exhibit variable operating performances.

The operating performance of the inverter type compressor may be raised or lowered by changing a frequency based on a difference between an indoor temperature and a target temperature during heating or cooling. More specifically, the inverter type compressor may control setting to a high frequency to raise the operating performance if a difference between an indoor temperature and a target temperature is great, which enables rapid cooling or heating. On the other hand, if an indoor temperature is close to a target temperature, this means that cooling or heating is accomplished to a certain extent and therefore, the inverter type compressor may control setting to a low frequency to lower the operating performance.

Although the inverter type compressor is expensive due to use of a great number of compressor control elements, such as a rectifier to convert AC to DC, voltage and frequency transformers and a controller to control these elements, the operating performance of the compressor maybe adjusted in a range of 10%~160% based on an indoor temperature even with use of a single compressor since the operating performance is variable to conform to an indoor temperature by controlling RPMs of a motor based on a changed frequency. This may reduce power consumption by 15%~25%, causing greater energy efficiency than other types of compressors.

The above-described various compressors are driven based on indoor information and operating-information, such as an indoor temperature, target temperature, etc. Thus, to control driving of the compressor, it may be necessary for the outdoor unit to receive the indoor information and operating-information from the indoor unit.

Additionally, the outdoor unit may need the indoor information and operating-information on the indoor unit when controlling the opening rate of an expansion valve that is used to adjust the flow rate of refrigerant to be fed into the indoor unit.

In other words, it may be necessary for the indoor unit to be equipped with a variety of detectors to detect indoor information, such as an indoor temperature, indoor heat exchanger temperature, etc., and a Printed Board Assembly (PBA) having a bidirectional communication function to send indoor information and operating-information input by a user to the outdoor unit and receive operating control signals from the outdoor unit.

Accordingly, in the case where a plurality of indoor units is connected to an outdoor unit to construct a multi air conditioner, providing each of the plurality of indoor units with a variety of detectors and a PBA having a bidirectional communication function may increase manufacturing costs of the air conditioner.

Moreover, in the case of a single type indoor unit that is not equipped with a variety of detectors and has no bidirectional communication function, constructing the multi air conditioner may be difficult.

According to an aspect of the present invention, there is provided a control method of a multi air conditioner according to claim 1. According to another aspect of the present invention, there is provided a multi air conditioner according to claim 9. Further advantageous aspects of the present invention are provided in the dependent claims.

Therefore, it is an aspect of the present invention to provide an air conditioner and a control method thereof, in which the flow rate of refrigerant to be fed to an indoor unit having a communication function and the flow rate of refrigerant to be fed to an indoor unit having no communication function are organically controlled by variably controlling the frequency of an inverter type compressor and adjusting the opening rate of an expansion valve.

It is another aspect of the present invention to provide an air conditioner and a control method thereof, in which the flow rate of refrigerant to be fed to an indoor unit having no indoor information detecting function and operating-information setting function is organically controlled.

Additional aspects of the invention will be set forth in part in the description which follows and, in part, will be obvious from the description, or may be learned by practice of the invention.

In accordance with one aspect of the present invention, a control method of a multi air conditioner including an outdoor unit having an inverter type compressor and outdoor heat exchanger and a plurality of indoor units each having an indoor heat exchanger, includes judging whether, among the plurality of indoor units, a first indoor unit, which communicates with the outdoor unit, and a second indoor unit, which does not communicate with the outdoor unit, are operated respectively, controlling driving of the compressor at a predetermined frequency and controlling an opening rate of a second flow-rate adjustable valve to adjust a flow rate of refrigerant to be fed to the second indoor unit based on a predetermined frequency of the compressor, predetermined indoor information of the second indoor unit, and outdoor information detected by the outdoor unit if solo operation of the second indoor unit is judged, and controlling a frequency of the compressor based on capacities of the first and second indoor units and indoor information transmitted from the first indoor unit and controlling opening rates of the first and second flow-rate adjustable valves respectively to adjust flow rates of refrigerant to be fed to the first and second indoor units based on indoor information of the first indoor unit, the frequency of the compressor and outdoor information detected by the outdoor unit and predetermined indoor information of the second indoor unit if simultaneous operation of the first and second indoor units is judged.

The predetermined information of the second indoor unit may include a predetermined indoor temperature, predetermined current overheating degree and predetermined target overheating degree, the indoor information of the first indoor unit may include an indoor temperature of a space in which the first indoor unit is installed, target temperature and inlet refrigerant temperature and outlet refrigerant temperature of a first indoor heat exchanger that is provided in the first indoor unit, and the outdoor information may include an outdoor temperature detected by an outdoor temperature detector and a discharge temperature detected by a discharge temperature detector.

The control of the opening rate of the second flow-rate adjustable valve upon solo operation of the second indoor unit may include calculating a target discharge temperature based on the outdoor temperature, predetermined frequency of the compressor, and predetermined indoor temperature, calculating a discharge temperature difference by comparing the target discharge temperature with the detected discharge temperature, and controlling the opening rate of the second flow-rate adjustable valve based on the calculated discharge temperature difference.

The control of the opening rate of the second flow-rate adjustable valve upon solo operation of the second indoor unit may further include adjusting the opening rate of the second flow-rate adjustable valve based on the predetermined current overheating degree, predetermined target overheating degree and predetermined frequency of the compressor.

The control of the opening rate of the second flow-rate adjustable valve upon solo operation of the second indoor unit may include calculating a corrective opening rate of the second flow-rate adjustable valve based on the discharge temperature difference, calculating an output opening rate of the second flow-rate adjustable valve by summing a pre-stored previous opening rate of the second flow-rate adjustable valve and the corrective opening rate of the second flow-rate adjustable valve, and controlling the opening rate of the second flow-rate adjustable valve to the calculated output opening rate.

The control method may further include storing a current target discharge temperature and detected discharge temperature for subsequent calculation of the output opening rate of the second flow-rate adjustable valve.

The control of the frequency of the compressor upon simultaneous operation of the first and second indoor units may include summing capacities of the first indoor unit and the second indoor unit, and controlling the frequency of the compressor based on the sum capacity and the indoor temperature and target temperature of the first indoor unit.

The control of the frequency of the compressor upon simultaneous operation of the first and second indoor units may further include varying the set frequency of the compressor based on variation of the indoor temperature, and applying the varied frequency to the compressor.

The control of the opening rates of the first and second flow-rate adjustable valves upon simultaneous operation of the first and second indoor units may include calculating a target discharge temperature based on the detected frequency of the compressor, outdoor temperature and indoor temperature transmitted from the first indoor unit, calculating a discharge temperature difference by comparing the target discharge temperature and the detected discharge temperature, calculating an overheating degree of the first indoor heat exchanger by comparing the inlet refrigerant temperature and outlet refrigerant temperature of the first indoor heat exchanger with each other, controlling the opening rate of the first flow-rate adjustable valve based on the discharge temperature difference, detected frequency of the compressor and overheating degree of the first indoor heat exchanger, and controlling the opening rate of the second flow-rate adjustable valve based on the discharge temperature difference, detected frequency of the compressor and predetermined overheating degree.

The control of the opening rates of the first and second flow-rate adjustable valves upon simultaneous operation of the first and second indoor units may include calculating a corrective opening rate of the first flow-rate adjustable valve based on the discharge temperature difference, detected frequency of the compressor and overheating degree of the first indoor heat exchanger, calculating an output opening rate of the first flow-rate adjustable valve by summing a pre-stored previous opening rate and corrective opening rate of the first flow-rate adjustable valve, controlling the opening rate of the first flow-rate adjustable valve to the calculated output opening rate of the first flow-rate adjustable valve, calculating a corrective opening rate of the second flow-rate adjustable valve based on the discharge temperature difference, detected frequency of the compressor and predetermined overheating degree, calculating an output opening rate of the second flow-rate adjustable valve by summing a pre-stored previous opening rate and corrective opening rate of the second flow-rate adjustable valve, and controlling the opening rate of the second flow-rate adjustable valve to the calculated output opening rate of the second flow-rate adjustable valve.

The control method may further include storing a current frequency of the compressor, target discharge temperature and detected discharge temperature for subsequent calculation of the output opening rates of the first and second flow-rate adjustable valves.

The control method may further include controlling a frequency of the compressor based on indoor information of the first indoor unit and controlling an opening rate of the first flow-rate adjustable valve to adjust a flow rate of refrigerant to be fed to the first indoor unit based on the indoor information of the first indoor unit and frequency of the compressor and outdoor information detected by the outdoor unit, if solo operation of the first indoor unit is judged.

The control of the frequency of the compressor upon solo operation of the first indoor unit may include setting the frequency of the compressor based on a target temperature and indoor temperature transmitted from the first indoor unit, varying the set frequency of the compressor based on variation of the indoor temperature, and applying the varied frequency to the compressor.

The control of the opening rate of the first flow-rate adjustable valve upon solo operation of the first indoor unit may include calculating a target discharge temperature based on the detected frequency of the compressor, detected outdoor temperature and indoor temperature from the first indoor unit, and controlling the opening rate of the first flow-rate adjustable valve by comparing the target discharge temperature with the detected current discharge temperature.

The control of the opening rate of the first flow-rate adjustable valve upon solo operation of the first indoor unit may include calculating an overheating degree by comparing the inlet refrigerant temperature and outlet refrigerant temperature of the first indoor heat exchanger, and controlling the opening rate of the first flow-rate adjustable valve based on the overheating degree and the detected frequency of the compressor.

The control method may further include calculating a discharge temperature difference by comparing the target discharge temperature with the detected discharge temperature, calculating a frequency difference by comparing the detected frequency of the compressor with the pre-stored previous frequency, calculating an overheating degree difference of the first indoor heat exchanger by comparing the current overheating degree of the first indoor heat exchanger with the predetermined target overheating degree of the first indoor heat exchanger, calculating a corrective opening rate of the first flow-rate adjustable valve based on the calculated discharge temperature difference, frequency difference of the compressor, and overhearing degree difference of the first indoor heat exchanger, calculating an output opening rate of the first flow-rate adjustable valve by summing the corrective opening rate of the first flow-rate adjustable valve and predetermined previous opening rate, and controlling the opening rate of the first flow-rate adjustable valve to the calculated output opening rate.

The control method may further include storing the detected frequency of the compressor, target discharge temperature and detected discharge temperature for subsequent calculation of the output opening rate of the second flow-rate adjustable valve.

The control method may further include operating the compressor at a starting frequency for a predetermined setting time if at least one of the first and second indoor units is operated and opening the first and second flow-rate adjustable valves to predetermined initial opening rates.

The control method may further include periodically controlling the frequency of the compressor, and periodically controlling the opening rate of the at least one of the first and second flow-rate adjustable valves.

In accordance with another aspect of the invention, an air conditioner includes a first indoor unit including a first indoor heat exchanger to perform heat exchange with indoor air of a first indoor space and an indoor information detector to detect indoor information, the first indoor unit having a communication function, a second indoor unit including a second indoor heat exchanger to perform heat exchange with indoor air of a second indoor space, the second indoor unit having no communication function, and an outdoor unit including an inverter type compressor, outdoor heat exchanger, first and second flow-rate adjustable valves to adjust flow rates of refrigerant to be fed to the first and second indoor units, and an outdoor information detector to detect outdoor information, wherein the outdoor unit further includes a controller, which judges whether or not at least one of the first and second indoor units is operated, controls operation of the compressor at a predetermined frequency upon solo operation of the second indoor unit, performs variable control of the frequency of the compressor based on indoor information of the first indoor unit upon simultaneous operation of the first and second indoor units, and controls an opening rate of the second flow-rate adjustable valve based on the frequency of the compressor, predetermined indoor information of the second indoor unit, outdoor information, and indoor information of the first indoor unit upon operation of the second indoor unit.

The outdoor information detector may include a discharge temperature detector to detect a temperature of refrigerant discharged from the compressor and an outdoor temperature detector to detect an outdoor temperature, and the outdoor unit may further include a frequency detector to detect the frequency of the compressor.

The indoor information detector of the first indoor unit may include an indoor temperature detector to detect an indoor temperature, an inlet refrigerant temperature detector to detect a temperature of refrigerant introduced into the first indoor heat exchanger, and an outlet refrigerant temperature detector to detect a temperature of refrigerant discharged from the second indoor heat exchanger.

The predetermined indoor information of the second indoor may include a predetermined indoor temperature, predetermined current overheating degree of the second heat exchanger, and predetermined target overheating degree of the second heat exchanger.

If solo operation of the second indoor unit is judged, the controller of the outdoor unit may calculate a target discharge temperature based on the outdoor temperature, detected frequency of the compressor, and predetermined indoor temperature, and may control the opening rate of the second flow-rate adjustable valve based on the target discharge temperature, detected discharge temperature, predetermined current overheating degree of the second indoor heat exchanger, predetermined target overheating degree of the second indoor heat exchanger and predetermined frequency of the compressor.

If solo operation of the first indoor unit is judged, the controller of the outdoor unit may calculate a target discharge temperature based on the outdoor temperature, detected frequency of the compressor and indoor temperature transmitted from the first indoor unit, and may control an opening rate of the first flow-rate adjustable valve based on the target discharge temperature, detected discharge temperature, overheating degree of the first indoor heat exchanger corresponding to a difference between the inlet refrigerant temperature and the outlet refrigerant temperature, predetermined target overheating degree of the first indoor heat exchanger and detected frequency of the compressor.

If simultaneous operation of the first and second indoor units is judged, the controller of the outdoor unit may calculate a target discharge temperature based on the outdoor temperature, detected frequency of the compressor and indoor temperature transmitted from the first indoor unit, may control an opening rate of the first flow-rate adjustable valve based on the target discharge temperature, detected discharge temperature, overheating degree of the first indoor heat exchanger corresponding to a difference between the inlet refrigerant temperature and the outlet refrigerant temperature, predetermined target overheating degree of the first indoor heat exchanger and detected frequency of the compressor, and may control the opening rate of the second flow-rate adjustable valve based on the target discharge temperature, detected discharge temperature, detected frequency of the compressor and predetermined overheating degree of the second indoor unit.

The outdoor unit may further include a storage unit that stores the predetermined indoor information of the second indoor unit, predetermined frequency of the compressor, detected frequency of the compressor, target discharge temperature, detected discharge temperature and opening rates of the first and second flow-rate adjustable valves.

The controller of the outdoor unit may variably control the frequency of the compressor based on capacities of the first and second indoor units and indoor temperature transmitted from the first indoor unit if simultaneous operation of the first and second indoor units is judged.

The outdoor unit may further include a power detector to detect power On/Off signals of the second indoor unit, and the controller of the outdoor unit may judge, based on the power On/Off signals, whether or not the second indoor unit is operated.

The controller of the outdoor unit may control operation of the compressor at a predetermined starting frequency for a predetermined setting time upon judging that at least one of the first and second indoor units is operated, and may control opening of the first and second flow-rate adjustable valves to predetermined initial opening rates.

In accordance with a further aspect of the invention, a multi air conditioner includes a first indoor unit including a first indoor heat exchanger to perform heat exchange with indoor air of a first indoor space and an indoor information detector to detect indoor information, the first indoor unit having a communication function, a second indoor unit including a second indoor heat exchanger to perform heat exchange with indoor air of a second indoor space, the second indoor unit having no communication function, and an outdoor unit including an inverter type compressor, outdoor heat exchanger, first and second flow-rate adjustable valves to adjust flow rates of refrigerant to be fed to the first and second indoor units, and an outdoor information detector to detect outdoor information, wherein the outdoor unit further includes a control device, which judges whether or not at least one of the first and second indoor units is operated, selects at least one information of indoor information transmitted from the first indoor unit, predetermined indoor information of the second indoor unit and outdoor information according to solo operation of the first indoor unit, solo operation of the second indoor unit and simultaneous operation of the first and second indoor units, and controls a frequency applied to the compressor and opening rates of the first and second flow rate adjustable valves based on the selected at least one information.

These and/or other aspects of the invention will become apparent and more readily appreciated from the following description of the embodiments, taken in conjunction with the accompanying drawings of which:

FIG. 1 is a block diagram illustrating a configuration of a multi air conditioner according to an embodiment;

FIG. 2 is a diagram illustrating a refrigeration cycle of the multi air conditioner according to the embodiment;

FIG. 3 is a diagram illustrating a control configuration of the multi air conditioner according to the embodiment;

FIG. 4 is a flowchart illustrating control of the multi air conditioner according to the embodiment;

FIG. 5 is a flowchart illustrating control of frequency variation of a compressor included in the multi air conditioner according to the embodiment;

FIG. 6 is a flowchart illustrating control of the opening rate of a flow-rate adjustable valve included in the multi air conditioner according to the embodiment; and

FIG. 7 is a diagram illustrating a refrigeration cycle of a multi air conditioner according to another embodiment.

Reference will now be made in detail to the embodiments of the present invention, examples of which are illustrated in the accompanying drawings, wherein like reference numerals refer to like elements throughout.

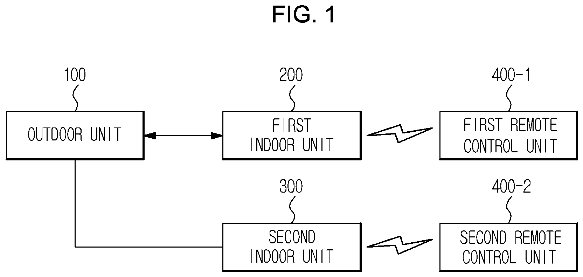

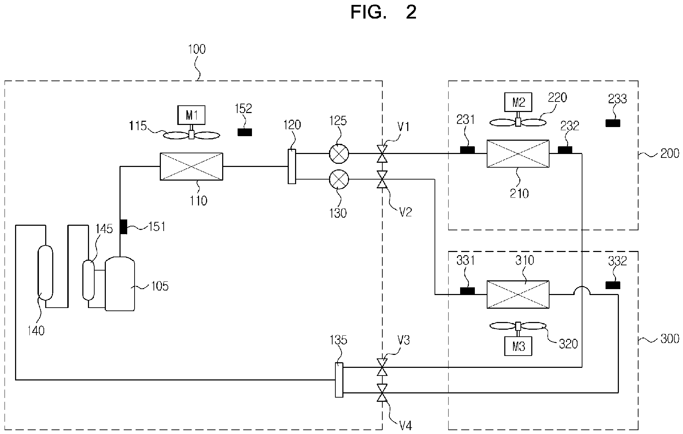

FIG. 1 is a block diagram illustrating a configuration of a multi air conditioner according to an embodiment, and FIG. 2 is a diagram illustrating a refrigeration cycle of the multi air conditioner according to the embodiment. The multi air conditioner includes an outdoor unit 100, first indoor unit 200, second indoor unit 300, first remote control unit 400-1 and second remote control unit 400-2.

In the multi air conditioner as illustrated in FIG. 1, the outdoor unit 100 is installed in an outdoor area, the first indoor unit 200 is installed in a first indoor space and performs a cooling operation to lower the temperature of air in the first indoor space via air circulation, the second indoor unit 300 is installed in a second indoor space and performs a cooling operation to lower the temperature of air in the second indoor space via air circulation, the first remote control unit 400-1 is used to control operation of the first indoor unit 200 and the second remote control unit 400-2 is used to control operation of the second indoor unit 300.

The multi air conditioner further includes refrigerant pipes, which are installed between the outdoor unit 100 and the first and second indoor units 200 and 300 to enable circulation of refrigerant based on a refrigeration cycle, and cables to electrically connect the outdoor unit 100, the first and second indoor units 200 and 300 and the first remote control unit 400-1 to one another for transmission of control signals.

The above-described configuration will be described hereinafter in more detail with reference to FIG. 2.

The outdoor unit 100 includes a compressor 105, which suctions and compresses low-temperature and low-pressure refrigerant to discharge high-temperature and high-pressure refrigerant, an outdoor heat exchanger 110 which performs heat exchange with outside air, an outdoor fan 115 which is rotated by a fan motor M1 to assist in exchanging heat via forced blowing of the air around the outdoor heat exchanger 110, and a first distributor 120 which distributes the refrigerant fed from the outdoor heat exchanger 110 to the first indoor unit 200 and the second indoor unit 300 respectively.

The first distributor 120 takes the form of a pipe to connect the refrigerant pipe of the single outdoor unit 100 to the refrigerant pipes of the plurality of indoor units 200 and 300. The first distributor 120 has a first hole and a plurality of second holes connected to the first hole, the second holes having different flow directions.

Specifically, the refrigerant pipe from the outdoor heat exchanger 110 is connected to the first hole of the first distributor 120, and the refrigerant pipe of the first indoor unit 200 and the refrigerant pipe of the second indoor unit 300 are connected respectively to the plurality of second holes. Accordingly, the refrigerant, which has exchanged heat in the outdoor heat exchanger 110, is fed to the first indoor unit 200 and the second indoor unit 300 by way of the first distributor 120.

The outdoor unit 100 further includes a first flow-rate adjustable valve 125 and second flow-rate adjustable valve 130. The first flow-rate adjustable valve 125 is located on the refrigerant pipe connected to the first indoor unit 200 among the refrigerant pipes connected to the first distributor 120 and serves to lower the pressure and temperature of refrigerant to ensure easy heat absorption by evaporation of refrigerant. The second flow-rate adjustable valve 130 is located on the refrigerant pipe connected to the second indoor unit 300 among the refrigerant pipes connected to the first distributor 120 and serves to lower the pressure and temperature of refrigerant to ensure heat absorption by evaporation of refrigerant.

The first and second flow-rate adjustable valves 125 and 130 are Electronic Expansion Valves (EEV), the opening rate of which is adjustable to control the flow rate of refrigerant.

The outdoor unit 100 further includes a second distributor 135, which collects refrigerant fed from the first indoor unit 200 and the second indoor unit 300 and supplies the refrigerant to the compressor 105.

Likewise, the second distributor 135 takes the form of a pipe to connect the refrigerant of the single outdoor unit 100 to the refrigerant pipes of the plurality of indoor units 200 and 300. The second distributor 135 has a first hole and a plurality of second holes connected to the first hole, the second holes having different flow directions.

The refrigerant pipe connected to a suction port of the compressor 105 is connected to the first hole of the second distributor 135, and the refrigerant pipe of the first indoor unit 200 and the refrigerant pipe of the second indoor unit 300 are connected respectively to the plurality of second holes. Accordingly, the refrigerant fed to the first indoor unit 200 and the second indoor unit 300 is collected in the second distributor 135 to thereby be fed to the compressor 105.

The outdoor unit 100 further includes an accumulator 140 and oil separator 145. The accumulator 140 is arranged at the suction side of the compressor 105 and serves to separate liquid refrigerant, which has not been evaporated, among the refrigerant fed from the plurality of indoor units 200 and 300 so as to prevent the liquid refrigerant from entering the compressor 105, which prevents damage to the compressor 105. The oil separator 145 serves to separate oil mixed in evaporated refrigerant discharged from the compressor 105 so as to return the oil to the compressor 105, which prevents deterioration in electric heating effects due to formation of oil films on surfaces of the outdoor heat exchanger 100 as well as on the indoor heat exchangers and also, prevents deterioration in lubrication effects due to shortage of lubricating oil within the compressor 105.

The outdoor unit 100 further includes an outdoor information detector 150 to detect outdoor information, such as outdoor space information, compressor information, etc.

The outdoor information detector 150 includes a discharge temperature detector 151, which is installed to the refrigerant pipe at the discharge side of the compressor 105 to detect the temperature of refrigerant discharged from the compressor 105, and an outdoor temperature detector 152 to detect the temperature of an outdoor space.

The first indoor unit 200 is adapted to cool the first indoor space using the principle of the enthalpy of vaporization.

The first indoor unit 200 includes a first indoor heat exchanger 210 and a first indoor fan 220. The first indoor heat exchanger 210 is connected to the first flow-rate adjustable value 125 such that the refrigerant fed through the first flow-rate adjustable valve 125 is evaporated to thereby exchange heat with indoor air in the first indoor heat exchanger 210. The first indoor fan 220 is rotated by a fan motor M2 to forcibly blow the heat exchanged air into the first indoor space.

The first indoor unit 200 further includes a first indoor information detector 230 to detect indoor information, such as information on the first indoor space, information on the first indoor heat exchanger 210, etc.

The first indoor information detector 230 includes an inlet refrigerant temperature detector 231, outlet refrigerant temperature detector 232, and indoor temperature detector 233. The inlet refrigerant temperature detector 231 is installed on an inlet refrigerant pipe of the first indoor heat exchanger 210 to detect the temperature of refrigerant moving in the inlet refrigerant pipe of the first indoor heat exchanger 210. The inlet refrigerant temperature detector 232 is installed on an outlet refrigerant pipe of the first indoor heat exchanger 210 to detect the temperature of refrigerant moving in the outlet refrigerant pipe of the first indoor heat exchanger 210. The indoor temperature detector 233 is used to detect the temperature of the first indoor space.

The second indoor unit 300 is adapted to cool the second indoor space using the principle of the enthalpy of vaporization.

The second indoor unit 300 includes a second indoor heat exchanger 310, second indoor fan 320, and second indoor information detector 330. The second indoor heat exchanger 310 is connected to the second flow-rate adjustable value 130 such that the refrigerant fed through the second flow-rate adjustable valve 130 is evaporated to thereby exchange heat with indoor air in the second indoor heat exchanger 310. The second indoor fan 320 is rotated by a fan motor M3 to forcibly blow the heat exchanged air into the second indoor space. The second indoor information detector 330 serves to detect indoor information, such as information on the second indoor space, information on the second indoor heat exchanger 310, etc.

The second indoor information detector 330 includes a second indoor heat exchange temperature detector 331 installed on the refrigerant pipe of the second indoor heat exchanger 310 to detect the temperature of the refrigerant pipe of the second heat exchanger 310, and an indoor temperature detector 332 to detect the temperature of the second indoor space.

As low-temperature and low-pressure refrigerant introduced into the first and second indoor heat exchangers absorbs heat around the first and second indoor heat exchangers, the refrigerant is changed into high-temperature and low-pressure gas-phase refrigerant while moving through the first and second indoor heat exchangers. In this case, evaporation of the refrigerant occurs in the first and second indoor heat exchangers, causing the surrounding temperature of the first and second indoor heat exchangers to fall.

The multi air conditioner further includes connection valves v1, v2, v3 and v4 to connect the refrigerant pipes of the outdoor unit 100 and the refrigerant pipes of the first and second indoor units 200 and 300 to each other.

The first remote control unit 400-1 is connected to the first indoor unit 200 in a wired or wireless manner and controls driving of the outdoor unit 100 and the first indoor unit 200 based on an operating mode of the first indoor unit 200 and a target temperature input by a user. The first remote control unit 400-1 may also function to switch on or off the second indoor unit 300.

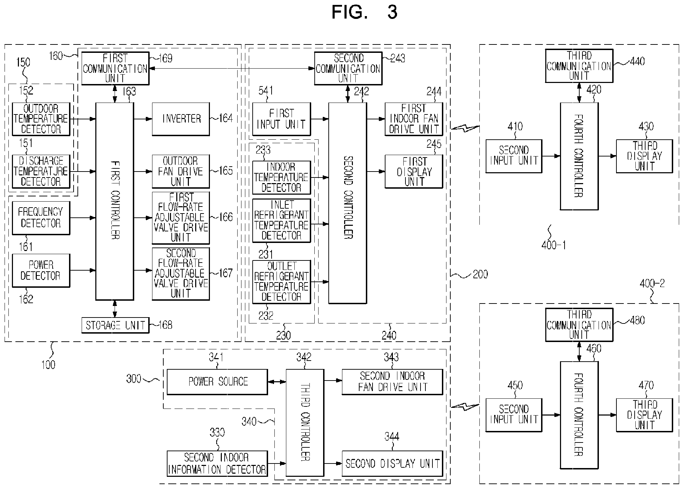

FIG. 3 is a control diagram of the multi air conditioner according to the embodiment.

If an operating command is input from at least one of the first indoor unit 200 and the second indoor unit 300, a control device 160 of the outdoor unit 100 controls driving of the compressor 105, outdoor fan 115 and first and second flow-rate adjustable valves 125 and 130, based on a variety of indoor information and operating-information transmitted from the corresponding indoor unit as well as a variety of outdoor information.

The control device 160 of the outdoor unit 100 includes a frequency detector 161, power detector 162, first controller 163, inverter 164, outdoor fan drive unit 165, first flow-rate adjustable valve drive unit 166, second flow-rate adjustable valve drive unit 167, storage unit 168, and first communication unit 169.

The frequency detector 161 is connected to an output side of the inverter 164 and serves to detect a frequency applied from the inverter 164 to the compressor 105 and transmit the detected frequency to the first controller 163.

The power detector 162 is connected to a power source of the second indoor unit 300 and serves to detect power On/Off of the second indoor unit 300 and transmit the detected power On/Off signals to the first controller 163.

The first controller 163 is electrically connected to the outdoor temperature detector 152, discharge temperature detector 151, frequency detector 161 and power detector 162 to receive detected data from the outdoor temperature detector 152, discharge temperature detector 151, frequency detector 161 and power detector 162.

The first controller 163 judges whether the first indoor unit 200 and the second indoor unit 300 are simultaneously operated, or whether the first indoor unit 200 or the second indoor unit 300 alone is operated.

In this case, the first controller 163 may judge whether or not the first indoor unit 200 is operated by confirming whether or not an operating command from the first indoor unit 200 is received through the first communication unit 169, and may judge whether or not the second indoor unit 300 is operated by confirming whether or not the power detector 162 detects a power On signal.

In other words, since the outdoor unit 100 bi-directionally communication with the first indoor unit 200, but does not communicate with the second indoor unit 300, the outdoor unit 100 recognizes only AC power On/Off of the second indoor unit 300.

If an operating command is transmitted from the first indoor unit 200 to the first controller 163, the first controller 163 controls driving of the compressor 105 at a predetermined starting frequency and also, controls opening of the first flow-rate adjustable valve 125 to a predetermined initial opening rate. After a predetermined setting time has passed, the first controller 163 performs variable control of the frequency of the compressor 105 based on indoor temperature, calculates a corrective opening rate of the first flow-rate adjustable valve 125 based on target discharge temperature, current discharge temperature, current frequency and previous frequency of the compressor 105 and a current inlet refrigerant temperature, current outlet refrigerant temperature and target overheating degree of the first indoor heat exchanger 210 and then, controls opening of the first flow-rate adjustable valve 125 based on the calculated corrective opening rate.

The target discharge temperature of the compressor 105 is calculated based on detected compressor's frequency, indoor temperature and outdoor temperature, and the frequency of the compressor 105 is calculated based on the indoor temperature and target temperature. In this case, the calculated frequency of the compressor 105 is variable based on the indoor temperature.

Additionally, the first controller 163 periodically controls the variable frequency of the compressor 105 and the opening rate of the first flow-rate adjustable valve 125.

If a power On signal of the second indoor unit 300 is detected, the first controller 163 controls driving of the compressor 105 at a predetermined starting frequency and also, controls opening of the second flow-rate adjustable valve 130 to a predetermined initial opening rate. After a predetermined setting time has passed, the first controller 163 calculates a corrective opening rate of the second flow-rate adjustable valve 130 based on target discharge temperature and current discharge temperature of the compressor 105, predetermined frequency of the compressor 105, predetermined current overheating degree and target overheating degree and then, controls opening of the second flow-rate adjustable valve 130 based on the calculated corrective opening rate.

The target discharge temperature of the compressor 105 is calculated based on predetermined frequency of the compressor 105, predetermined indoor temperature and detected outdoor temperature.

The predetermined frequency of the compressor 105 corresponds to the capacity of the second indoor unit 300, the predetermined current overheating degree is a difference between the current inlet refrigerant temperature and the current outlet refrigerant temperature of the second indoor heat exchanger 310, and the predetermined previous overheating degree is a difference between a previous inlet refrigerant temperature and a previous outlet refrigerant temperature of the second indoor heat exchanger 310.

The predetermined current overheating degree and previous overheating degree may be set to have the same value such that a difference therebetween becomes zero.

The first controller 163 periodically controls the opening rate of the second flow-rate adjustable valve 130. Here, the period corresponds to a time of approximately one minute.

If simultaneous operation of the first and second indoor units 200 and 300 is judged, the first controller 163 controls driving of the compressor 105 at a predetermined starting frequency and also, controls opening of the first and second flow-rate adjustable valves 125 and 130 to predetermined initial opening rates respectively. After a predetermined setting time has passed, the first controller 163 sums the capacity of the first indoor unit 200 and the capacity of the second indoor unit 300 and performs variable control of the frequency of the compressor 105 based on the sum capacity and an indoor temperature of the first indoor space.

Then, the first controller 163 calculates a corrective opening rate of the first flow-rate adjustable valve 125 based on target discharge temperature, current discharge temperature, current frequency and previous frequency of the compressor 105 and current inlet refrigerant temperature, current outlet refrigerant temperature and target overheating degree of the first indoor heat exchanger 210 and then, controls opening of the first flow-rate adjustable valve 125 based on the calculated corrective opening rate. Also, the first controller 163 calculates a corrective opening rate of the second flow-rate adjustable valve 130 based on target discharge temperature, current discharge temperature, predetermined frequency, predetermined current overheating degree and target overheating degrees of the compressor 105 and then, controls opening of the second flow-rate adjustable valve 130 based on the calculated corrective opening rate.

The target discharge temperature of the compressor 105 is calculated based on detected outdoor temperature, indoor temperature of the first indoor space and frequency of the compressor 105, and the frequency of the compressor 105 is calculated based on indoor temperature and target temperature. In this case, the calculated frequency of the compressor 105 is variable based on indoor temperature.

The inverter 164 receives AC power having a fixed frequency and fixed voltage from a commercial power source and converts the AC power into DC power by rectifying and smoothing the AC power to remove ripples. Thereafter, the inverter 164 changes DC voltage to a voltage and frequency corresponding to a control command from the first controller 163 and transmits the resulting voltage and frequency to a motor (not shown) of the compressor 105.

The outdoor fan drive unit 165 drives the outdoor fan 115 in response to a drive command from the first controller 163.

The first flow-rate adjustable valve drive unit 166 opens or closes the first flow-rate adjustable valve 125 in response to a drive command from the first controller 163. Thus, upon opening of the first flow-rate adjustable valve 125, the first flow-rate adjustable valve 125 is opened to an opening rate corresponding to the drive command from the first controller 163.

The second flow-rate adjustable valve drive unit 167 opens or closes the second flow-rate adjustable valve 130 in response to a drive command from the first controller 163. Thus, upon opening of the second flow-rate adjustable valve 130, the second flow-rate adjustable valve 130 is opened to an opening rate corresponding to the drive command from the first controller 163.

The storage unit 168 stores predetermined information on the second indoor unit 300, such as a current overheating degree and target overheating degree of the second indoor heat exchanger 310, an indoor temperature and target temperature of the second indoor space, the capacity of the second indoor unit 300, the frequency of the compressor 105, etc.

The storage unit 168 stores a starting frequency of the compressor 105 and initial opening rates of the first and second flow-rate adjustable valves 125 and 130.

The storage unit 168 further stores a frequency of the compressor 105 and a discharge temperature difference. The discharge temperature difference is a difference between a detected discharge temperature and a target discharge temperature of the compressor 105.

The first communication unit 169 performs communication with the first indoor unit 200 in response to a command from the first controller 193.

Specifically, the first communication unit 169 receives operating-information and indoor information from the first indoor unit 200 and transmits the information to the first controller 163 during operation of the first indoor unit 200, and transmits operating control signals, corresponding to a command from the first controller 163, to the first indoor unit 200.

A control device 240 of the first indoor unit 200 controls driving of the first indoor fan 220 in response to an operating command input via a first input unit 241 or the first remote control unit 400-1, and transmits a variety of data detected by a variety of detectors during operation as well as operating-information input via the first input unit 241 or the first remote control unit 400-1 to the outdoor unit 100.

The control device 240 of the first indoor unit 200 includes the first input unit 241, second controller 242, second communication unit 243, first indoor fan drive unit 244 and first display unit 245.

The first input unit 241 receives an operating command and operating-information input by the user. The operating command is a driving command based on power On/Off of the first indoor unit 200, and the operating-information includes operating modes corresponding to setting of a target temperature, direction of wind and wind speed.

The second controller 242 may control driving of the first indoor fan 220, blade (not shown), etc. in response to operating command and operating-information if the operating command and operating-information are input from the first input unit 241.

Also, the second controller 242 may control driving of the first indoor fan 220, blade (not shown), etc. in response to a command transmitted from the outdoor unit 100 via the second communication unit 243.

The second controller 242 is electrically connected to the inlet refrigerant temperature detector 231 and outlet refrigerant temperature detector 232 of the first indoor heat exchanger 210 and the indoor temperature detector 233, and receives detected data from the inlet refrigerant temperature detector 231, outlet refrigerant temperature detector 232 and indoor temperature detector 233.

The second controller 242 controls driving of the second communication unit 243 and transmits indoor information, such as an operating command, indoor temperature, inlet refrigerant temperature, outlet refrigerant temperature, etc., and operating-information, such as a target temperature, operating mode, etc., to the outdoor unit 100.

The second controller 242 further controls display of operating-information, such as a target temperature and operating command input by the user as well as display of the detected indoor temperature.

The second controller 242 controls driving of at least one of the second flow-rate adjustable valve 130 and the compressor 105, to prevent refrigerant from being fed to the second indoor unit 300 if an indoor temperature of the second indoor space is less than a target temperature and a power off signal from the second indoor unit 300 is detected.

That is to say, if the first and second indoor units 200 and 300 are simultaneously operated, the second controller 242 controls the second flow-rate adjustable valve 130 to be closed, thereby preventing refrigerant from being fed to the second indoor unit 300. If the second indoor unit 300 alone is operated, the second controller 242 controls the compressor 105 to stop operation, thereby preventing refrigerant from being fed to the second indoor unit 300.

The second communication unit 243 performs communication with the outdoor unit 100 in response to a command from the second controller 242.

The first indoor fan drive unit 244 drives the first indoor fan 220 in response to a control command from the second controller 242.

The first display unit 245 displays operating-information, such as a target temperature and operating mode input by the user, in response to a control command from the second controller 242 and then, displays the detected indoor temperature.

A control device 340 of the second indoor unit 300 controls driving of the second indoor fan 220 based on power On/Off signals, enabling cooling of the second indoor space.

The control device 340 of the second indoor unit 300 includes a power source 341, third controller 342, second indoor fan drive unit 343 and second display unit 344.

The power source 341 is connected to an external commercial power source, to receive AC power from the commercial power source and convert the AC power to DC power required to operate the respective components of the second indoor unit 300.

The power source 341 may directly receive a power On or Off command input by the user or transmitted from the second remote control unit 400-2. The power source 341 supplies operating power to the respective components if a power On command is input, and intercepts supply of operating power to the respective components if a power Off command is input.

In this case, the power source 341 includes a switch (not shown) connected to the power detector 162 of the outdoor unit 100 and may supply power to the respective components of the second indoor unit 300 via the switch. Specifically, the power source 341 may switch the switch off in response to a power Off command from the third controller 342 so as to intercept supply of power to the respective components and prevent the power detector 162 from detecting power.

The third controller 342 is electrically connected to the second indoor heat exchanger temperature detector 331. The third controller 342 may judge whether or not the second indoor heat exchanger 310 is frozen by comparing a temperature of the second indoor heat exchanger 310 with a predetermined reference temperature and controls power Off of the power source 341 if freezing of the second indoor heat exchanger 310 is judged.

The third controller 342 is electrically connected to the second indoor temperature detector 332 and controls display of an indoor temperature of the second indoor space detected by the second indoor temperature detector 332.

Power Off of the power source 341 may be controlled for a predetermined time sufficient to defrost the second heat exchanger, or may be controlled until a temperature of the second indoor heat exchanger 310 falls below a predetermined reference temperature in a state in which the second indoor unit 300 is kept in a standby mode.

The third controller 342 controls rotation of the second indoor fan 320 during operation of the second indoor unit 300.

Specifically, the third controller 342 may control additional functions, such as, e.g., control of rotation of the second indoor fan 320, display of the indoor temperature detected via the second indoor temperature detector 332, and anti-freezing of the second heat exchanger based on the temperature detected via the second indoor heat exchanger temperature detector 331, without sending information thereof to the outdoor unit 100.

The third controller 342 functions to receive signals transmitted from the second remote control unit 400-2.

The third controller 342 receives power On/Off signals from the second remote control unit 400-2, target temperature and operating mode of the second indoor space, etc.

More specifically, the third controller 342 controls supply of power to the respective components so as to initiate an operation if a power On signal from the second remote control unit 400-2 is detected, and controls interception of power to the respective components to stop the operation if a power Off signal from the second remote control unit 400-2 is detected.

If an indoor temperature of the second indoor space falls below a target temperature of the second indoor space based on results of comparison during operation, supply of power to the respective components is intercepted to keep the respective components in a standby mode.

The third controller 342 compares an indoor temperature of the second indoor space with a target temperature of the second indoor space during stoppage. In this case, if the indoor temperature of the second indoor space is greater than the target temperature, the third controller 342 initiates supply of power to the respective components, enabling implementation of a cooling operation.

The second indoor fan drive unit 343 drives the second indoor fan 320 in response to a command from the third controller 342.

The second display unit 244 displays a temperature of the second indoor space in response to a command from the third controller 342.

The first remote control unit 400-1 may receive an operating command or operating-information on the first indoor unit 200 input by the user, and may send the operating command or operating-information to the first indoor unit 200.

The first remote control unit 400-1 includes a second input unit 410, fourth controller 420, third display unit 430 and third communication unit 440.

The second input unit 410 receives operating-information, such as an indoor target temperature, operating mode, etc., input by the user and transmits the input information to the fourth controller 420.

The fourth controller 420 controls driving of the third communication unit 440 and transmits the operating-information input via the second input unit 410 to the first indoor unit 200.

The fourth controller 420 controls display of the operating-information input by the user.

The third display unit 430 displays the operating-information in response to a command of the fourth controller 420.

The third communication unit 440 is connected to the second communication unit 243 of the first indoor unit 200 in a wired or wireless manner, and transmits the operating-information input by the user to the first indoor unit 200 in response to a command from the fourth controller 420.

The second remote control unit 400-2 may receive an operating command or operating-information on the second indoor unit 300 input by the user, and send the operating command or operating-information to the second indoor unit 300.

The second remote control unit 400-2 includes a third input unit 450, fifth controller 460, fourth display unit 470 and fourth communication unit 480.

The third input unit 450 receives operating-information, such as an indoor target temperature, operating mode, etc., input by the user and transmits the input information to the fifth controller 460.

The fifth controller 460 controls driving of the fourth communication unit 480 and transmits the operating-information input via the third input unit 450 to the second indoor unit 300.

The fifth controller 460 controls display of the operating-information input by the user.

The fourth display unit 470 displays the operating-information in response to a command from the firth controller 460.

The fourth communication unit 480 is connected to the third communication unit 343 of the second indoor unit 300 in a wired or wireless manner, and transmits the operating-information input by the user to the second indoor unit 300 in response to a command of the fifth controller 460.

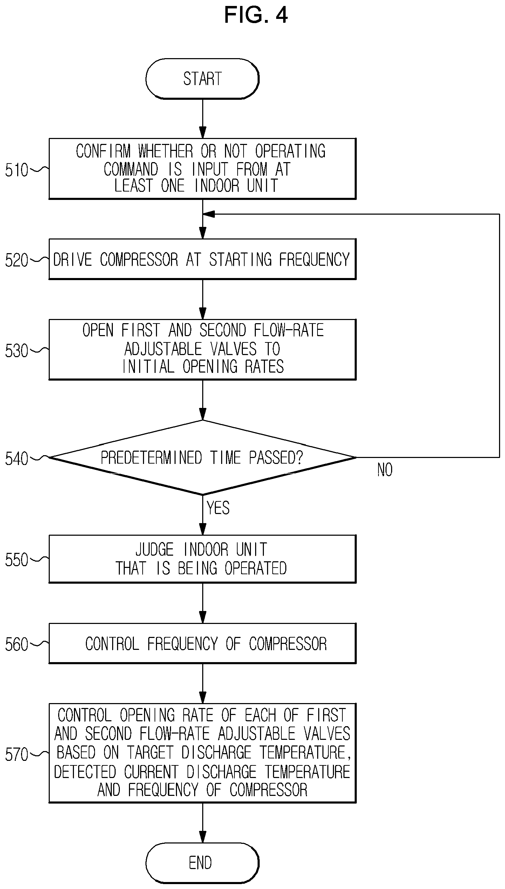

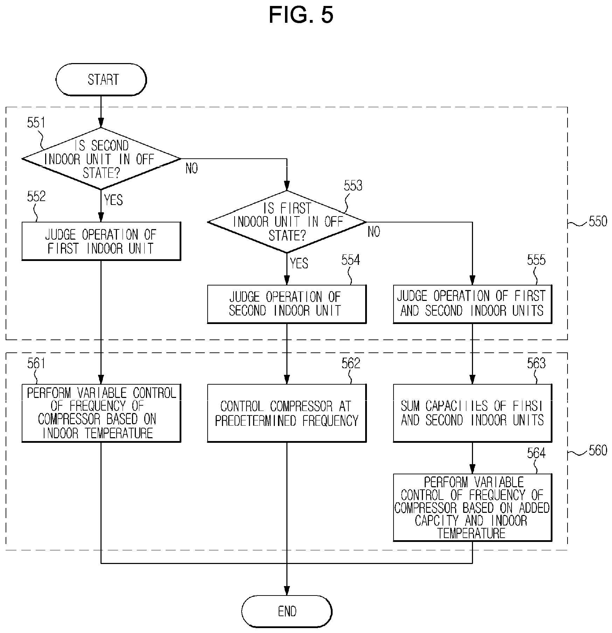

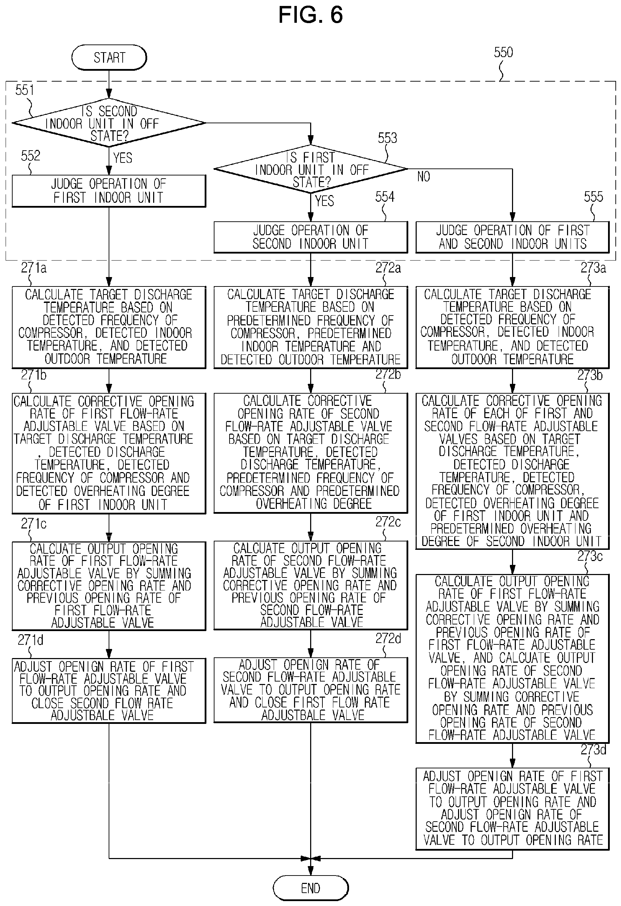

FIG. 4 is an operating control flowchart of a heat pump according to the embodiment. The operating control will be described with reference to FIGS. 5 and 6.

The outdoor unit of the multi air conditioner confirms whether or not an operating command is input from at least one of the first indoor unit 200 and the second indoor unit 300 (510).

In this case, the outdoor unit 100 of the multi air conditioner judges whether or not an operating command of the first indoor unit 200 is input by confirming whether or not an operating command signal of the first indoor unit 200 is received via the first communication unit 169, and judges whether or not an operating command of the second indoor unit 300 is input by detecting a power On signal applied to the second indoor unit 300 via the power detector 162.

Next, upon judging that the operating command is input from at least one of the first indoor unit 200 and the second indoor unit 300, the multi air conditioner drives the compressor 105 at a predetermined starting frequency (520) and opens the first and second flow-rate adjustable valves 125 and 130 to predetermined initial opening rates (530), performing an initial operation for a predetermined time.

The initial opening rates of the first and second flow-rate adjustable valves 125 and 130 may be equal to or different from each other.

Upon judging that the operating command is input only from the first indoor unit 200 in an initial operating stage, the multi air conditioner may set a starting frequency of the compressor 105 based on an indoor temperature and target temperature of the first indoor space and may open the first flow-rate adjustable valve 125 to an initial opening rate. Also, upon judging that the operating command is input only from the second indoor unit 300 in an initial operating stage, the multi air conditioner may drive the compressor 105 at a predetermined starting frequency and may open the second flow-rate adjustable valve 130 to an initial opening rate.

Upon judging that the first and second indoor units 200 and 300 are simultaneously operated, the outdoor unit 100 of the multi air conditioner may sum capacities of the first and second indoor units 200 and 300 and may set a starting frequency of the compressor 105 based on the sum capacity of the indoor units 200 and 300 and an indoor temperature and target temperature of the first indoor space.

Next, after a predetermined setting time has passed (540), the outdoor unit 100 of the multi air conditioner judges which indoor unit is being operated (550), and controls a frequency of the compressor 105 based on the judged result (560). Then, the outdoor unit 100 calculates a target discharge temperature of the compressor 105 based on the frequency of the compressor 105 and a corrective opening rate of the first flow-rate adjustable valve 125 based on the calculated target discharge temperature and detected current discharge temperature of the compressor 105, and controls the opening rate of the corresponding flow-rate adjustable valve based on the calculated corrective opening rate (570), thereby controlling the flow rate of refrigerant to be fed into the heat exchanger of the indoor unit that is being operated.

In this case, the flow rate of refrigerant to be fed to the heat exchanger of the indoor unit that is being operated may be organically controlled by periodically controlling the frequency of the compressor 105 as well as the opening rate of the flow-rate adjustable valve.

A method of controlling the frequency of the compressor will now be described in detail with reference to FIG. 5.

As illustrated in FIG. 5, the outdoor unit 100 of the multi air conditioner judges whether or not the second indoor unit 300 is in an Off state (551). If the second indoor unit 300 is in the Off state, the outdoor unit 100 judges that the first indoor unit 200 alone is operated (552).

Next, if the second indoor unit 300 is in an On state, the outdoor unit 100 judges whether or not the first indoor unit 200 is in an Off state (553). If the first indoor unit 200 is in the Off state, the outdoor unit 100 judges that the second indoor unit 300 alone is operated (554). On the other hand, if the first indoor unit 200 is in On state, simultaneous operation of the first and second indoor units 200 and 300 is judged (555).

Next, a frequency of the compressor 105 is controlled based on the judged results. It is noted that the frequency of the compressor 105 is periodically controlled until a target temperature or operating mode is changed.

This will be described in more detail as follows.

If the solo operation of the first indoor unit 200 is judged, the outdoor unit 100 receives an indoor temperature and target temperature of the first indoor space from the first indoor unit 200, sets a frequency of the compressor 105 based on the received indoor temperature and target temperature, and performs variable control of the set frequency depending on variation of the indoor temperature (561).

If the solo operation of the second indoor unit 300 is judged (determined), the outdoor unit 100 controls driving of the compressor 105 at a predetermined frequency (562).

If the simultaneous operation of the first and second indoor units 200 and 300 is judged, the outdoor unit 100 receives an indoor temperature and target temperature of the first indoor space from the first indoor unit 200 via communication with the first indoor unit 200, and sums capacities of the first and second indoor units 200 and 300 (563). Then, the outdoor unit 100 sets a frequency of the compressor 105 based on the sum capacity of the indoor units 200 and 300 and performs variable control of the set frequency depending on variation of the indoor temperature (564).

The capacity of the second indoor unit 300 is preset, and the capacity of the first indoor unit 200 is a corrected value of a preset maximum capacity based on a difference between the target temperature and the indoor temperature of the first indoor space.

As such, the frequency of the compressor 205 is variably controlled again starting from a stage of operating the compressor 205 at a starting frequency if the target temperature or the operating mode is changed.

A method of controlling the opening rate of the flow-rate adjustable valve will be described in detail with reference to FIG. 6.

As illustrated in FIG. 6, the outdoor unit 100 of the multi air conditioner judges whether or not the first indoor unit 200 is in an Off state (551). If the second indoor unit 300 is in the Off state, the solo operation of the first indoor unit 200 is judged (552).

Next, if the second indoor unit 300 is in an On state, the outdoor unit 100 judges whether or not the first indoor unit 200 is in an Off state (553). If the first indoor unit 200 is in the Off state, the solo operation of the second indoor unit 300 is judged (554). On the other hand, if the first indoor unit 200 is in an On state, the simultaneous operation of the first and second indoor units 200 and 30 is judged (555).

Next, the opening rate of the flow-rate adjustable valve is controlled based on the judged results. The opening rate is periodically controlled. This will be described in more detail as follows.

First, controlling the opening rate of the first flow-rate adjustable valve 125 with respect to the solo operation of the first indoor unit 200 will be described.

If the solo operation of the first indoor unit 200 is judged, the outdoor unit 100 receives an indoor temperature, target temperature, inlet refrigerant temperature and outlet refrigerant temperature of the first indoor heat exchanger 210 from the first indoor unit 200 via bi-directional communication with the first indoor unit 200.

Next, a target discharge temperature is calculated based on a current frequency $C\_s\_f$ of the compressor 105 detected by the frequency detector 161, an indoor temperature $T\_s\_i$ detected by the indoor temperature detector 233, and an outdoor temperature To detected by the outdoor temperature detector 152 (271a).

A target discharge temperature $T\_d\_c\_1$ of the compressor 105 is a temperature to optimize an overheating degree of the compressor 105 during suction depending on a required performance of the first indoor unit 200.

Equation 1

$$T\_d\_c\_1 = (C1 \times C\_s\_f) + (To\text{-}35) \times C2 + (27\text{-}T\_s\_i) \times C3 + C4$$

Here, numerical values "35" and "27" are examples of upper limits of the outdoor temperature and indoor temperature, and "$C_1$", "$C_2$", "$C_3$" and "$C_4$" are constants determined depending on the number of indoor units that are being operated.

Next, the outdoor unit 100 calculates a discharge temperature difference $T\_c\_diff\_1$ by comparing the target discharge temperature $T\_d\_c\_1$ with a current discharge temperature $T\_s\_c$ detected by the discharge temperature detector 151, calculates a frequency difference $F\_diff\_1$ by comparing a previous frequency $F\_s\_b$ with a current frequency $F\_s\_c$ detected by the frequency detector 161, and calculates an overheating degree difference $SH\_diff\_1$ by comparing a predetermined target overheating degree $SH\_p\_d\_1$ with a current overheating degree $SH\_s\_c$ corresponding to a temperature difference between inlet refrigerant and outlet refrigerant of the first indoor heat exchanger 210.

Next, a corrective opening rate $EEV\_c\_1$ of the first flow-rate adjustable valve 125 is calculated using the calculated discharge temperature difference, frequency difference and overheating degree difference (271b).

The outdoor unit 100 stores the frequency of the compressor 105, target discharge temperature, current discharge temperature and discharge temperature difference for subsequent calculation of a corrective opening rate.

This is calculated based on the following Equation 2.

Equation 2

$$EEV\_c\_1 = (T\_c\_diff\_1 \times C) \times w1 + (F\_diff\_1 \times B) \times w2 + (SH\_diff\_1 \times A) \times w3$$

Here, $T\_c\_diff\_1 = T\_d\_c\_1 - T\_s\_c$, $F\_diff\_1 = F\_p\_c - F\_p\_b$,

$SH\_diff\_1 = SH\_p\_c - SH\_p\_d\_1$,

"A", "B" and "C" are constants determined depending on the number of indoor units that are being operated, and "wi", "w2" and "w3" are given different weights.

The outdoor unit 100 may calculate a discharge temperature variation value by comparing a previous discharge temperature difference T_c_diff_1' with the current discharge temperature difference T_c_diff_1, and may calculate a corrective opening rate of the second flow-rate adjustable valve 130 by additionally reflecting the calculated discharge temperature variation value.

Equation 3

$$EEV\_c\_1 = ((T\_c\_ch\_1 \times D) + (T\_c\_diff\_1 \times C) \times w1 + (F\_diff\_1 \times B) \times w2 + (SH\_diff\_1 \times A) \times w3$$

Here, T_c_ch_1=T_c_diff_1 - T_c_diff_1',

"A", "B", "C" and "D" are constants determined depending on the number of indoor units that are being operated, and "w1", "w2" and "w3" are given different weights.

Next, an initial opening rate EEV_e_1 and a corrective opening rate EEV_c_1 of the first flow-rate adjustable valve 125 are summed to calculate an output opening rate of the first flow-rate adjustable valve 125 (271c). Then, the first flow-rate adjustable valve 125 is opened to the sum output opening rate (EEV_o_1 = EEV_e_1 + EEV_c_2), and the second flow-rate adjustable valve 130 is closed because the second indoor unit 300 is not operated (271d).

In this case, if the sum opening rate is a positive value, control is performed to increase the opening rate of the first flow-rate adjustable valve 125. If the sum opening rate is a negative value, control is performed to decrease the opening rate of the first flow-rate adjustable valve 125.

Next, the outdoor unit 100 periodically controls the opening rate of the first flow-rate adjustable valve 125 during operation of the compressor 105.

In this case, the outdoor unit 100 sums a previous opening rate EEV_b_1 and a corrective opening rate EEV_c_1 of the first flow-rate adjustable valve 125, opens the first flow-rate adjustable valve 125 to the sum output opening rate of the first flow-rate adjustable valve 125 (EEV_o_1 = EEV_b_1 + EEV_c_1), and stores the output opening rate of the first flow-rate adjustable valve 125 for subsequent control of the opening rate of the first flow-rate adjustable valve 125.

Second, controlling the opening rate of the second flow-rate adjustable valve 130 with respect to the solo operation of the second indoor unit 300 will be described.

If the solo operation of the second indoor unit 300 is judged, the outdoor unit 100 calculates a target discharge temperature based on a predetermined frequency C_p_f of the compressor (i.e., performance of the compressor 105), predetermined indoor temperature T_p_i, and outdoor temperature To detected by the outdoor temperature detector 152 (272a).

In this case, a frequency detected by the frequency detector 161 may be used.

A target discharge temperature T_d_c_2 of the compressor 105 is a temperature to optimize an overheating degree of the compressor 105 during suction depending on the performance of the second indoor unit 300.

Equation 4

$$T\_d\_c\_2 = (C1 \times C\_p\_f) + (To\text{-}35) \times C2 + (27\text{-}T\_p\_i) \times C3 + C4$$

Here, numerical values "35" and "27" are examples of upper limits of the outdoor temperature and indoor temperature, and "C1", "C2", "C3" and "C4" are constants determined depending on the number of indoor units that are being operated.

Next, the outdoor unit 100 calculates a discharge temperature difference T_c_diff_2 by comparing the target discharge temperature T_d_c_2 with a current discharge temperature T_s_c detected by the discharge temperature detector 151, calculates a frequency difference F_diff_2 by comparing a previous frequency F_p_b with a predetermined current frequency F_p_c, calculates an overheating degree difference SH_diff_2 by comparing a predetermined target overheating degree SH_p_d_2 with a predetermined current overheating degree SH_p_c, and calculates a corrective opening rate EEV_c_2 of the second flow-rate adjustable valve 130 using the calculated discharge temperature difference, frequency difference and overheating degree difference (272b).

The outdoor unit 100 stores the target discharge temperature, current discharge temperature, discharge temperature difference and current output opening rate for subsequent calculation of an output opening rate.

The predetermined current overheating degree may be calculated under the assumption that it is equal to the target overheating degree and a difference between the two overheating degrees is zero.

When the predetermined frequency is used as a frequency of the compressor, the current frequency is equal to the previous frequency and a difference between the two frequencies is zero, and a frequency difference between the frequency detected by the frequency detector 161 and the frequency of the compressor is not zero. This is because the frequency of the compressor has an erroneous value even if the compressor is operated at the predetermined frequency.

This is calculated based on the following Equation 5.

Equation 5

$$EEV\_c\_2 = (T\_c\_diff\_2 \times C) \times w1 + (F\_diff\_2 \times B) \times w2 + (SH\_diff\_2 \times A) \times w3$$

Here, T_c_diff_2 = T_d_c_1 - T_s_c, F_diff_2 = F_p_c - F_p_b,

SH_diff_2 = SH_p_c - SH_p_d_2,

"A", "B" and "C" are constants determined depending on the number of indoor units that are being operated, and "w1", "w2" and "w3" are given different weights.

The outdoor unit 100 may calculate a discharge temperature variation value by comparing a previous discharge temperature difference T_c_diff_2' with the current discharge temperature difference T_c_diff_2, and may calculate a corrective opening rate of the second flow-rate adjustable valve by additionally reflecting the calculated discharge temperature variation value.

Equation 6

$$EEV\_c\_2 = ((T\_c\_ch\_2 \times D) + (T\_c\_diff\_2 \times C) \times w1 + (F\_diff\_2 \times B)) \times w2 +$$
$$(SH\_diff\_2 \times A) \times w3$$

Here, T_c_ch_2 = T_c_diff_2 - T_c_diff_2',

"A", "B", "C" and "D" are constants determined depending on the number of indoor units that are being operated, and "w1", "w2" and "w3" are given different weights.

Next, an initial opening rate EEV_e_2 and a corrective opening rate EEV_c_2 of the second flow-rate adjustable valve 130 are summed to calculate an output opening rate of the second flow-rate adjustable valve 130 (272c), and the second flow-rate adjustable valve 130 is opened to the sum output opening rate (EEV_o_2 = EEV_e_2 + EEV_c_2) and the first flow-rate adjustable valve 125 is closed because the first indoor unit 200 is not operated (272d).

In this case, if the sum opening rate is a positive value, control is performed to increase the opening rate of the second flow-rate adjustable valve 130. If the sum opening rate is a negative value, control is performed to decrease the opening rate of the second flow-rate adjustable valve 130.

Next, the outdoor unit 100 periodically controls the opening rate of the second flow-rate adjustable valve 130 during operation of the compressor 105.

In this case, the outdoor unit 100 sums a previous opening rate EEV_b_2 and a corrective opening rate EEV_c_2 of the second flow-rate adjustable valve 130, opens the second flow-rate adjustable valve 130 to the sum output opening rate of the second flow-rate adjustable valve 130 (EEV_o_2 = EEV_b_2 + EEV_c_2), and stores the output opening rate of the second flow-rate adjustable valve 130 for subsequent control of the opening rate of the second flow-rate adjustable valve 130.

As such, the flow rate of refrigerant to be fed to the second indoor unit 300 is organically adjustable by controlling the opening rate of the second flow-rate adjustable valve 130 connected to the second indoor unit 300 even if the outdoor unit 100 and the second indoor unit 300 have no bi-directional communication function.

Third, controlling the opening rate of the first and second flow-rate adjustable valves 125 and 130 with respect to the simultaneous operation of the first and second indoor units 200 and 300 will be described.

If the simultaneous operation of the first and second indoor units 200 and 300 is judged, the outdoor unit 100 receives an indoor temperature, target temperature, inlet refrigerant temperature and outlet refrigerant temperature of the first indoor heat exchanger 210 from the first indoor unit 200 via bi-directional communication with the first indoor unit 200.

Next, the target discharge temperature is calculated based on the current frequency C_s_f of the compressor detected by the frequency detector 161, indoor temperature T_s_i detected by the indoor temperature detector 233 and outdoor temperature To detected by the outdoor temperature detector 152 (273a).

The target discharge temperature T_d_c_1 of the compressor 105 is a temperature to optimize an overheating degree of the compressor 105 during suction depending on a required performance of the first indoor unit 200 and the performance of the second indoor unit 300.

Equation 7

$$T\_d\_c\_1 = (C1 \times C\_s\_f) + (To\text{-}35) \times C2 + (27\text{-}T\_s\_i) \times C3 + C4$$

Here, numerical values "35" and "27" are examples of upper limits of the outdoor temperature and indoor temperature, and "C1", "C2", "C3" and "C4" are constants determined depending on the number of indoor units that are being operated.

Next, the outdoor unit 100 calculates the discharge temperature difference T_c_diff_1 by comparing the target discharge temperature T_d_c_1 with the current discharge temperature T_s_c detected by the discharge temperature detector 151, and calculates the frequency difference F_diff_1 by comparing the previous frequency F_s_b with the current frequency F_s_c of the compressor detected by the frequency detector 161.

Next, the outdoor unit 100 calculates the overheating degree difference SH_diff_1 by comparing the predetermined target overheating degree SH_p_d_1 with the current overheating degree SH_s_c corresponding to a temperature difference between inlet refrigerant and outlet refrigerant of the first indoor heat exchanger 210, and calculates the overheating degree difference SH_diff_2 of the second indoor heat exchanger 310 by comparing the predetermined target overheating degree SH_p_d_2 with the current overheating degree SH_p_c.

Next, corrective opening rates EEV_c_1 and EEV_c_2 of the first and second flow-rate adjustable valves are calculated respectively using the calculated discharge temperature difference, frequency difference of the compressor, overheating degree differences of the first and second indoor heat exchangers (273b).

The outdoor unit stores the frequency of the compressor, target discharge temperature, current discharge temperature and discharge temperature difference for subsequent calculation of a corrective opening rate.

This is calculated based on the following Equations 8 and 9.

Equation 8

$$EEV\_c\_1 = (T\_c\_diff\_1 \times C) \times w1 + (F\_diff\_1 \times B) \times w2 + (SH\_diff\_1 \times A) \times w3$$

Equation 9

$$EEV\_c\_2 = (T\_c\_diff\_1 \times C) \times w1 + (F\_diff\_1 \times B) \times w2 + (SH\_diff\_2 \times A) \times w3$$

Here, T_c_diff_1 = T_d_c_1 - T_s_c, F_diff_1 = F_p_c - F_p_b,

SH_diff_1 = SH_p_c - SH_p_d_1,

SH_diff_2 = SH_p_c - SH_p_d_2,

"A", "B" and "C" are constants determined depending on the number of indoor units that are being operated, and "w1", "w2" and "w3" are given different weights.

The predetermined current overheating degree may be calculated under the assumption that it is equal to the target overheating degree and a difference SH_ diff_2 between the two overheating degrees is zero.

The outdoor unit 100 may calculate the discharge temperature variation value by comparing the previous discharge temperature difference T_c_diff_1' with the current discharge temperature difference T_c_diff_1, and may calculate the corrective opening rate of the second flow-rate adjustable valve 130 by additionally reflecting the calculated discharge temperature variation value.

Equation 10

$$EEV\_c\_1 = ((T\_c\_ch\_1 \times D) + (T\_c\_diff\_1 \times C) \times w1 + (F\_diff\_1 \times B) \times w2 + (SH\_diff\_1 \times A) \times w3$$

Equation 11

$$EEV\_c\_2 = ((T\_c\_ch\_1 \times D) + (T\_c\_diff\_1 \times C) \times w1 + (F\_diff\_1 \times B) \times w2 + (SH\_diff\_1 \times A) \times w3$$

Here, T_c_ch_1 = T_c_diff_1 - T_c_diff_1',

"A", "B", "C" and "D" are constants determined depending on the number of indoor units that are being operated, and "w1", "w2" and "w3" are given different weights.

Next, the initial opening rate EEV_e_1 and corrective opening rate EEV_c_1 of the first flow-rate adjustable valve 125 are summed to calculate the output opening rate, and the initial opening rate EEV_e_2 and corrective opening rate EEV_c_2 of the second flow-rate adjustable valve 130 are summed to calculate the output opening rate (273c).

Next, the first flow-rate adjustable valve 125 is opened to the sum output opening rate (EEV_o_1 = EEV_e_1 + EEV_c_1), and the second flow-rate adjustable valve 130 is opened to the sum output opening rate (EEV_o_2 = EEV_e_2 + EEV_c_2) (273d).

Next, the outdoor unit 100 periodically controls the opening rates of the first and second flow-rate adjustable valves 125 and 130 during operation of the compressor 105.

In this case, the outdoor unit 100 sums a previous opening rate EEV_b_1 and corrective opening rate EEV_c_1 of the first flow-rate adjustable valve 125 and opens the first flow-rate adjustable valve 125 to the sum output opening rate of the first flow-rate adjustable valve 125 (EEV_o_1 = EEV_b_1 + EEV_c_1). Also, the outdoor unit 100 sums a previous opening rate EEV_b_2 and corrective opening rate EEV_c_2 of the second flow-rate adjustable valve 130 and opens the second flow-rate adjustable valve 130 to the sum output opening rate of the second flow-rate adjustable valve 130 (EEV_o_2 = EEV_b_2 + EEV_c_2).

The outdoor unit 100 stores the output opening rates of the first and second flow-rate adjustable valves 125 and 130 for subsequent control of the opening rates of the first and second flow-rate adjustable valves 125 and 130.

As such, with bi-directional communication between the outdoor unit 100 and the first indoor unit 200, the flow rate of refrigerant to be fed to the first indoor unit 200 is adjustable by controlling the opening rate of the first flow rate adjusting valve 125 based on indoor information and operating-information. Further, even if the second indoor unit 300 does not perform bi-directional communication with the outdoor unit 100, the flow rate of refrigerant to be fed to the second indoor unit 300 is organically adjustable by controlling the opening rate of the second flow rate adjusting valve 130 connected to the second indoor unit 300.

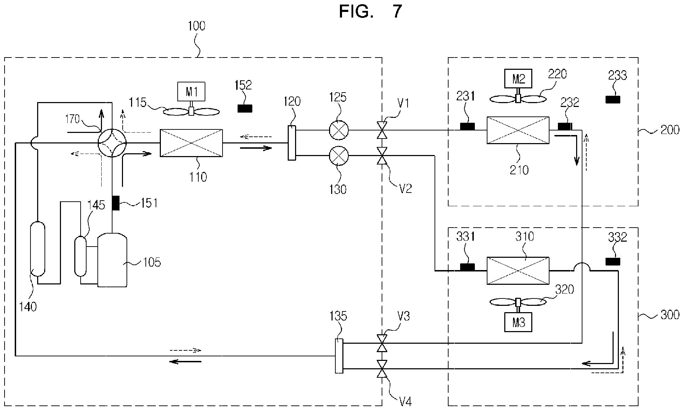

FIG. 7 is a diagram illustrating a refrigeration cycle of a multi air conditioner according to another embodiment. The refrigeration cycle of the present embodiment further employs a 4-way valve unlike the above-described embodiment and thus, the multi air conditioner of the present embodiment performs both heating and cooling operations.

As illustrated in FIG. 7, the outdoor unit 100 includes the compressor 105 to suction and compress low-temperature and low-pressure refrigerant to discharge high-temperature and high-pressure refrigerant, the outdoor heat exchanger 110 to exchange heat with outside air, the outdoor fan 115 adapted to be rotated by the fan motor M1 to assist in exchanging heat via forced blowing of the air around the outdoor heat exchanger 110, the first and second flow-rate adjustable valves 125 and 130 located on the refrigerant pipes between the first and second indoor units 200 and 300 and the outdoor unit 100 to lower the pressure and temperature of refrigerant to ensure easy heat absorption by evaporation of refrigerant, the accumulator 140 arranged at the suction side of the compressor 105 to separate not-evaporated liquid refrigerant to prevent the liquid refrigerant from entering the compressor 105 so as to prevent damage to the compressor 105, the oil separator 145 to separate oil mixed in evaporated refrigerant discharged from the compressor 105 so as to return the oil to the compressor 105, and a 4-way valve 170 installed at the discharge side of the compressor 105 to switch the flow direction of refrigerant depending on a cooling or heating operation.

During a heating operation, the 4-way valve 170 guides high-temperature and high-pressure refrigerant discharged from the compressor 105 to the first and second indoor units 200 and 300, and guides low-temperature and low-pressure refrigerant of the outdoor heat exchanger 110 to the accumulator 140. In this case, the outdoor heat exchanger 130 functions as an evaporator.

During a cooling operation, the 4-way valve 170 guides high-temperature and high-pressure refrigerant discharged from the compressor 105 to the outdoor heat exchanger 110, and guides low-temperature and low-pressure refrigerant of the first and second indoor units 200 and 300 to the accumulator 140. In this case, the outdoor heat exchanger 130 functions as a condenser.

As described, the function of the outdoor heat exchanger 110 is determined based on a cooling operation or a heating operation.

The heating operation of the multi air conditioner is as follows. It is assumed that both the first and second indoor units perform a heating operation.

The multi air conditioner switches the 4-way valve 170 such that refrigerant discharged from the compressor 105 of the outdoor unit 100 is directly moved to the indoor heat exchangers 210 and 310 of the first and second indoor units 200 and 300 and simultaneously, drives the outdoor fan 115.

Specifically, if the compressor 105 is driven, the high-temperature and high-pressure refrigerant discharged from the compressor 105 is moved to the indoor heat exchangers 210 and 310 of the first and second indoor units 200 and 300 by way of the 4-way valve 170, the indoor heat exchangers serving as a condenser. In this case, the refrigerant having passed through the 4-way valve 170 is divided by the second distributor 135 to thereby be moved to the indoor heat exchangers 210 and 310 of the first and second indoor units 200 and 300.

Next, the refrigerant exchanges heat with indoor air via rotation of the indoor fans 220 and 320 of the first and second indoor units 200 and 300 while passing through the indoor heat exchangers 210 and 310 of the first and second indoor units 200 and 300. In this way, heating of indoor spaces is implemented.

The refrigerant condensed by heat exchange with the indoor air is depressurized while passing through the first and second flow-rate adjustable valves 125 and 130 of the outdoor unit 100. The depressurized refrigerant is collected in the first distributor 120 and fed to the outdoor heat exchanger 110 of the outdoor unit 100. Thereafter, the refrigerant is evaporated in the outdoor heat exchanger 110 and the evaporated gas-phase refrigerant is returned to the compressor 105.

The cooling operation of the multi air conditioner is as follows. It is assumed that both the first and second indoor units perform a cooling operation.

The multi air conditioner switches the 4-way valve 170 such that refrigerant discharged from the compressor 105 of the outdoor unit 100 is directly moved to the outdoor heat exchanger 110 of the outdoor unit 100 and simultaneously, drives the outdoor fan 115.

Specifically, if the compressor 105 is driven, the high-temperature and high-pressure refrigerant discharged from the compressor 105 is moved to the outdoor heat exchanger 110 of the outdoor unit 100 by way of the 4-way valve 170, the outdoor heat exchanger 110 serving as a condenser.

In this case, the refrigerant exchanges heat with outdoor air via rotation of the outdoor fan 115 while passing through the outdoor heat exchanger 110 of the outdoor unit 100, thereby causing hot wind to be discharged to an outdoor space.

The refrigerant condensed in the outdoor heat exchanger 110 of the outdoor unit 100 is distributed by the first distributor 120 to thereby be moved to the first and second flow-rate adjustable valves 125 and 130 and is depressurized while passing through the first and second flow-rate adjustable valves 125 and 130. The depressurized refrigerant absorbs heat in the indoor heat exchangers 210 and 310 of the first and second indoor units 200 and 300 that function as an evaporator.

In this case, the indoor heat exchangers 210 and 310 of the first and second indoor units 200 and 300 perform heat exchange with indoor air, and cold air is blown into each indoor space by rotation of the indoor fans 220 and 320.

The refrigerant, which has absorbed heat in the indoor heat exchangers 210 and 310 of the first and second indoor units 200 and 300, is collected in the second distributor 135 and is moved to the compressor 105 by way of the 4-way valve 170 and the accumulator 140.

The first indoor unit 200 and the second indoor unit 300 of the multi air conditioner according to the present embodiment are identical to the first indoor unit 200 and the second indoor unit 300 of the multi air conditioner according to the above-described embodiment and thus, configurations of the first and second indoor units 200 and 300 and the outdoor unit 100 will be described below in brief.

The outdoor unit 100 controls the opening direction of the 4-way valve 170 based on a cooling operation or heating operation command, thereby allowing at least one of the first and second indoor units to perform a cooling operation or a heating operation.

The outdoor unit 100 may perform bi-directional communication with the first indoor unit 200, but may do not communicate with the second indoor unit 300.

Thus, the outdoor unit 100 adjusts the flow rate of refrigerant to be fed to the first indoor unit 200 based on indoor information and operating-information of the first indoor unit 200, and adjusts the flow rate of refrigerant to be fed to the second indoor unit 300 based on power On/Off signals of the second indoor unit 300.

Similar to the above-described embodiment, when adjusting the flow rate of refrigerant to be fed to the first indoor unit 200, the outdoor unit 100 adjusts the quantity of refrigerant, which is discharged from the compressor 105 and fed into the first indoor unit 200, by controlling the performance of the compressor 105 via variable control of the frequency of the compressor 105 based on target temperature and indoor temperature, and adjusts the flow rate of refrigerant to be fed into the first indoor unit 200 by adjusting the opening rate of the first flow-rate adjustable valve 125 based on the frequency of the compressor 105, discharge temperature and overheating degree of the first indoor heat exchanger 210.

The target discharge temperature is calculated based on the detected indoor temperature, detected frequency of the compressor, and detected outdoor temperature.

Additionally, when adjusting the flow rate of refrigerant to be fed into the second indoor unit 300, the outdoor unit 100 drives the compressor 105 at a predetermined frequency of the compressor 105 and adjusts the flow rate of refrigerant to be fed into the second indoor unit 300 by adjusting the opening rate of the second flow-rate adjustable valve 130 based on a predetermined frequency of the compressor 105, predetermined current overheating degree, predetermined target overheating degrees, target discharge temperature and detected discharge temperature of the compressor 105.

The target discharge temperature is calculated based on predetermined indoor temperature, predetermined frequency of the compressor 105, and detected outdoor temperature.

Similar to the above-described embodiment, upon simultaneous operation of the first and second indoor units 200 and 300, the outdoor unit 100 adjusts the quantity of refrigerant, which is discharged from the compressor 105 and fed into the first and second indoor units 200 and 300, by controlling the performance of the compressor 105 via variable control of the frequency of the compressor 105 based on capacities of the first and second indoor units 200 and 300, target temperature and indoor temperature, and adjusts the flow rate of refrigerant to be fed into the first indoor unit 200 by adjusting the opening rate of the first flow-rate adjustable valve 125 based on detected frequency and discharge temperature of the compressor 105 and overheating degree of the first indoor heat exchanger 210. Also, the outdoor unit 100 adjusts the flow rate of refrigerant to be fed into the second indoor unit 300 by adjusting the opening rate of the second flow rate adjusting valve 130 based on detected frequency of the compressor 105, detected discharge temperature of the compressor 105, predetermined current overheating degree and predetermined target overheating degree.

As described above, not only the indoor unit having no communication function, but also the indoor unit having a communication function may be used in the multi air conditioner using the inverter type compressor without requiring any change. Accordingly, various types of indoor units are applicable to the air conditioner, which enables flexible model management. In addition, a home multi air conditioner may be realized by additionally connecting an indoor unit having no communication function to the air conditioner having the inverter type compressor that is controlled via communication.

Even in the case where a conventional single type indoor unit having no communication function is applied to the air conditioner, variable control of the frequency of the compressor depending on load variation and organic control of the opening rate of the expansion valve may be possible so as to optimize the air of the indoor space.

With adjustment of the flow rate of refrigerant to be fed to the indoor unit having no communication function, the indoor unit does not need a PBA for communication and a temperature sensor for detection of indoor information, which may reduce the number of components, such as the PBA and temperature detector, resulting in reduction in manufacturing costs of the air conditioner.

Although a few embodiments of the present invention have been shown and described, it would be appreciated by those skilled in the art that changes may be made in these embodiments without departing from the principles of the invention, the scope of which is defined in the claims.

**Claims**

1. A control method of a multi air conditioner comprising an outdoor unit (100) having an inverter type compressor (105), an outdoor heat exchanger (110), and a power detector (162), and a plurality of indoor units each having an indoor heat exchanger (210, 310), said power detector (162) configured to detect power on/off signals of a second indoor unit of said plurality of indoor units, the method comprising:

   judging whether, among the plurality of indoor units (200, 300), a first indoor unit (200), which communicates with the outdoor unit (100), and said second indoor unit (300), which does not communicate with the outdoor unit (100), are operated respectively;
   controlling driving of the compressor (105) at a predetermined frequency and controlling an opening rate of a second flow-rate adjustable valve (130) to adjust a flow rate of refrigerant to be fed to the second indoor unit (300) based on a predetermined frequency of the compressor (105), predetermined indoor information of the second indoor unit (300), and outdoor information detected by the outdoor unit (100), if solo operation of the second indoor unit (300) is judged; and
   controlling a frequency of the compressor (105) based on capacities of the first and second indoor units (200, 300) and indoor information transmitted from the first indoor unit (200), and controlling opening rates of first and second flow-rate adjustable valves (125, 130) respectively to adjust flow rates of refrigerant to be fed to the first and second indoor units (200, 300) based on indoor information of the first indoor unit (200), the frequency of the compressor (105) and outdoor information detected by the outdoor unit (100) and predetermined indoor information of the second indoor unit (300), if simultaneous operation of the first and second indoor units (125, 130) is judged,

wherein the judging whether or not the second indoor unit (300) is operated, includes judging whether or not an operating command of the second indoor unit (300) is input by detecting a power on signal applied to the second indoor unit (300) via the power detector (162).

2. The control method according to claim 1, wherein the predetermined information of the second indoor unit (300) includes a predetermined indoor temperature, predetermined current overheating degree and predetermined target overheating degree,

wherein the indoor information of the first indoor unit (100) includes an indoor temperature of a space in which the first indoor unit (200) is installed, target temperature and inlet refrigerant temperature and outlet refrigerant temperature of a first indoor heat exchanger (210) that is provided in the first indoor unit (200), and

wherein the outdoor information includes an outdoor temperature detected by an outdoor temperature detector (152) and a discharge temperature detected by a discharge temperature detector (151).

3. The control method according to claim 2, wherein the control of the opening rate of the second flow-rate adjustable valve (130) upon solo operation of the second indoor unit (300) includes:

calculating a target discharge temperature based on the outdoor temperature, predetermined frequency of the compressor (105), and predetermined indoor temperature;

calculating a discharge temperature difference by comparing the target discharge temperature with the detected discharge temperature; and

calculating a corrective opening rate of the second flow-rate adjustable valve (130) based on the discharge temperature difference;

calculating an output opening rate of the second flow-rate adjustable valve (130) by summing a pre-stored previous opening rate of the second flow-rate adjustable valve (130) and the corrective opening rate of the second flow-rate adjustable valve (130);

controlling the opening rate of the second flow-rate adjustable valve (130) to the calculated output opening rate; and

storing a current target discharge temperature and detected discharge temperature for subsequent calculation of the output opening rate of the second flow-rate adjustable valve (130).

4. The control method according to claim 2, wherein the control of the frequency of the compressor (105) upon simultaneous operation of the first and second indoor units (200, 300) includes:

summing capacities of the first indoor unit (200) and the second indoor unit (300); and

controlling the frequency of the compressor (105) based on the sum capacity and the indoor temperature and target temperature of the first indoor unit (200), and

wherein the set frequency of the compressor (105) varies based on variation of the indoor temperature, and the varied frequency is applied to the compressor (105).

5. The control method according to claim 4, wherein the control of the opening rates of the first and second flow-rate adjustable valves (125, 130) upon simultaneous operation of the first and second indoor units (200, 300) includes:

calculating a target discharge temperature based on the detected frequency of the compressor (105), outdoor temperature and indoor temperature transmitted from the first indoor unit (200);

calculating a discharge temperature difference by comparing the target discharge temperature and the detected discharge temperature;

calculating an overheating degree of the first indoor heat exchanger (210) by comparing the inlet refrigerant temperature and outlet refrigerant temperature of the first indoor heat exchanger (210) with each other;

controlling the opening rate of the first flow-rate adjustable valve (125) based on the discharge temperature difference, detected frequency of the compressor and overheating degree of the first indoor heat exchanger (210); and

controlling the opening rate of the second flow-rate adjustable valve (130) based on the discharge temperature difference, detected frequency of the compressor and predetermined overheating degree.

6. The control method according to claim 5, wherein the control of the opening rates of the first and second flow-rate adjustable valves (125, 130) upon simultaneous operation of the first and second indoor units (200, 300) includes:

calculating a corrective opening rate of the first flow-rate adjustable valve (125) based on the discharge temperature difference, detected frequency of the compressor (105) and overheating degree of the first indoor heat exchanger (210);
calculating an output opening rate of the first flow-rate adjustable valve (125) by summing a pre-stored previous opening rate and corrective opening rate of the first flow-rate adjustable valve (125);
controlling the opening rate of the first flow-rate adjustable valve (125) to the calculated output opening rate of the first flow-rate adjustable valve (125);
calculating a corrective opening rate of the second flow-rate adjustable valve (130) based on the discharge temperature difference, detected frequency of the compressor (105) and predetermined overheating degree;
calculating an output opening rate of the second flow-rate adjustable valve (130) by summing a pre-stored previous opening rate and corrective opening rate of the second flow-rate adjustable valve (130);
controlling the opening rate of the second flow-rate adjustable valve (130) to the calculated output opening rate of the second flow-rate adjustable valve (130); and
storing a current frequency of the compressor (105), target discharge temperature and detected discharge temperature for subsequent calculation of the output opening rates of the first and second flow-rate adjustable valves (125, 130).

7. The control method according to claim 2, further comprising:

if the first indoor unit alone is operated,
setting the frequency of the compressor (105) based on a target temperature and indoor temperature transmitted from the first indoor unit (200);
varying the set frequency of the compressor (105) based on variation of the indoor temperature;
applying the varied frequency to the compressor (105); and
controlling an opening rate of the first flow-rate adjustable valve (125) to adjust a flow rate of refrigerant to be fed to the first indoor unit (200) based on the indoor information of the first indoor unit (200) and frequency of the compressor (105) and outdoor information detected by the outdoor unit (100),

wherein the control of the opening rate of the first flow-rate adjustable valve (125) upon solo operation of the first indoor unit (200) includes:

calculating a target discharge temperature based on the detected frequency of the compressor (105), detected outdoor temperature and indoor temperature from the first indoor unit (200);
calculating a discharge temperature difference by comparing the target discharge temperature with the detected current discharge temperature;
calculating a frequency difference by comparing the detected frequency of the compressor (105) with the pre-stored previous frequency;
calculating an overheating degree difference of the first indoor heat exchanger (210) by comparing the current overheating degree of the first indoor heat exchanger (210) with the predetermined target overheating degree of the first indoor heat exchanger (210);
calculating a corrective opening rate of the first flow-rate adjustable valve (125) based on the calculated discharge temperature difference, frequency difference of the compressor (105), and overhearing degree difference of the first indoor heat exchanger (210);
calculating an output opening rate of the first flow-rate adjustable valve (125) by summing the corrective opening rate of the first flow-rate adjustable valve (125) and predetermined previous opening rate;
controlling the opening rate of the first flow-rate adjustable valve (125) to the calculated output opening rate; and
storing the detected frequency of the compressor (105), target discharge temperature and detected discharge temperature for subsequent calculation of the output opening rate of the second flow-rate adjustable valve (130).

8. The control method according to claim 1, further comprising operating the compressor (105) at a starting frequency for a predetermined setting time if at least one of the first and second indoor units (200, 300) is operated and opening the first and second flow-rate adjustable valves (125, 130) to predetermined initial opening rates.

9. A multi air conditioner comprising:

a first indoor unit (200) including a first indoor heat exchanger (210) to perform heat exchange with indoor air of a first indoor space and an indoor information detector to detect indoor information, the first indoor unit (200) having a communication function;
a second indoor unit (300) including a second indoor heat exchanger (310) to perform heat exchange with indoor air of a second indoor space, the second indoor unit (300) having no communication function; and
an outdoor unit including an inverter type compressor (105), outdoor heat exchanger (110), first and second flow-rate adjustable valves (125, 130) to adjust flow rates of refrigerant to be fed to the first and second indoor units (200, 300), and an outdoor information detector to detect outdoor information,
wherein the outdoor unit (300) further includes a controller (163), which judges whether or not at least one of the first and second indoor units (200, 300) is operated, controls operation of the compressor (105) at a predetermined frequency upon solo operation of the second indoor unit (300), performs variable control of the frequency of the compressor (105) based on indoor information of the first indoor unit (200) upon simultaneous operation of the first and second indoor units (200, 300), and controls an opening rate of the second flow-rate adjustable valve (130) based on the frequency of the compressor (105), predetermined indoor information of the second indoor unit (300), outdoor information, and indoor information of the first indoor unit (200) upon operation of the second indoor unit (300),
wherein the outdoor unit (100) further includes a power detector (162) to detect power on/off signals of the second indoor unit (300), and
wherein the controller (163) of the outdoor unit (100) judges, based on the power on/off signals, whether or not the second indoor unit (300) is operated.

10. The multi air conditioner according to claim 9, wherein the outdoor unit further includes a frequency detector (161) to detect the frequency of the compressor (105),
wherein the outdoor information detector includes a discharge temperature detector (151) to detect a temperature of refrigerant discharged from the compressor (105) and an outdoor temperature detector (152) to detect an outdoor temperature,
wherein the indoor information detector of the first indoor unit (200) includes an indoor temperature detector (233) to detect an indoor temperature, an inlet refrigerant temperature detector (231) to detect a temperature of refrigerant introduced into the first indoor heat exchanger, and an outlet refrigerant temperature detector (232) to detect a temperature of refrigerant discharged from the first indoor heat exchanger (210), and
wherein the predetermined indoor information of the second indoor unit includes a predetermined indoor temperature, predetermined current overheating degree of the second heat exchanger (310), and predetermined target overheating degree of the second heat exchanger (310).

11. The multi air conditioner according to claim 10, wherein, if solo operation of the second indoor unit (300) is judged, the controller (163) of the outdoor unit (100) calculates a target discharge temperature based on the outdoor temperature, detected frequency of the compressor (105), and predetermined indoor temperature, and controls the opening rate of the second flow-rate adjustable valve (130) based on the target discharge temperature, detected discharge temperature, predetermined current overheating degree of the second indoor heat exchanger (310), predetermined target overheating degree of the second indoor heat exchanger (310) and predetermined frequency of the compressor (105).

12. The multi air conditioner according to claim 10, wherein, if solo operation of the first indoor unit (200) is judged, the controller (160) of the outdoor unit (100) calculates a target discharge temperature based on the outdoor temperature, detected frequency of the compressor (105) and indoor temperature transmitted from the first indoor unit (200), and controls an opening rate of the first flow-rate adjustable valve (125) based on the target discharge temperature, detected discharge temperature, overheating degree of the first indoor heat exchanger (210) corresponding to a difference between the inlet refrigerant temperature and the outlet refrigerant temperature, predetermined target overheating degree of the first indoor heat exchanger (210) and detected frequency of the compressor (105).

13. The multi air conditioner according to claim 10, wherein, if simultaneous operation of the first and second indoor units (200, 300) is judged, the controller (163) of the outdoor unit (100) calculates a target discharge temperature based on the outdoor temperature, detected frequency of the compressor (105) and indoor temperature transmitted from the first indoor unit (200), controls an opening rate of the first flow-rate adjustable valve(125) based on the target discharge temperature, detected discharge temperature, overheating degree of the first indoor heat exchanger (210) corresponding to a difference between the inlet refrigerant temperature and the outlet refrigerant temperature, predetermined target overheating degree of the first indoor heat exchanger (210) and detected frequency of the compressor (105), controls the opening rate of the second flow-rate adjustable valve (130) based on the target discharge temperature, detected discharge temperature, detected frequency of the compressor (105) and predetermined overheating degree of the second indoor unit (300), and variably controls the frequency of the compressor (105) based on capacities of the first and second indoor units (200, 300) and indoor temperature transmitted from the first indoor unit (200).

14. The multi air conditioner according to claim 13, wherein the outdoor unit (100) further includes a storage unit (168) that stores the predetermined indoor information of the second indoor unit (300), predetermined frequency of the compressor (105), detected frequency of the compressor(105), target discharge temperature, detected discharge temperature and opening rates of the first and second flow-rate adjustable valves (125, 130).

## Patentansprüche

1. Ein Steuerungsverfahren von einer Multiklimaanlage, die eine Außeneinheit (100), die einen Inverter-Typ-Verdichter (105), einen Außenwärmetauscher (110) und einen Leistungsdetektor (162) aufweist, und eine Vielzahl von Inneneinheiten, die jeweils einen Innenwärmetauscher (210, 310) aufweisen, beinhaltet, wobei der genannte Leistungsdetektor (162) konfiguriert ist, um Leistungs-Ein-/Aus-Signale von einer zweiten Inneneinheit der genannten Vielzahl von Inneneinheiten zu detektieren, wobei das Verfahren Folgendes beinhaltet:

Ermessen, ob aus der Vielzahl von Inneneinheiten (200, 300) eine erste Inneneinheit (200), die mit der Außeneinheit (100) kommuniziert, und eine zweite Inneneinheit (300), die mit der Außeneinheit (100) nicht kommuniziert, jeweils betrieben werden;
Steuern des Treibens des Verdichters (105) mit einer vorgegebenen Frequenz und Steuern einer Öffnungsrate eines zweiten durchflussratenanpassbaren Ventils (130), um eine Durchflussrate eines an die zweite Inneneinheit (300) zu speisenden Kältemittels basierend auf einer vorgegebenen Frequenz des Verdichters (105), vorgegebenen Inneninformationen der zweiten Inneneinheit (300) und von der Außeneinheit (100) detektierten Außeninformationen anzupassen, falls ein Solobetrieb der zweiten Inneneinheit (300) ermessen wird; und
Steuern einer Frequenz des Verdichters (105) basierend auf Kapazitäten der ersten und zweiten Inneneinheit (200, 300) und von der ersten Inneneinheit (200) übertragenen Inneninformationen und Steuern von Öffnungsraten eines ersten bzw. zweiten durchflussratenanpassbaren Ventils (125, 130), um Durchflussraten eines an die erste und zweite Inneneinheit (200, 300) zu speisenden Kältemittels basierend auf Inneninformationen der ersten Inneneinheit (200), der Frequenz des Verdichters (105) und von der Außeneinheit (100) detektierten Außeninformationen und vorgegebenen Inneninformationen der zweiten Inneneinheit (300) anzupassen, falls ein gleichzeitiger Betrieb der ersten und zweiten Inneneinheit (125, 130) ermessen wird,
wobei das Ermessen, ob die zweite Inneneinheit (300) betrieben wird oder nicht, das Ermessen umfasst, ob ein Betriebsbefehl der zweiten Inneneinheit (300) eingegeben wird oder nicht, indem ein an der zweiten Inneneinheit (300) angewandtes Leistungs-Ein-Signal über den Leistungsdetektor (162) detektiert wird.

2. Steuerungsverfahren gemäß Anspruch 1, wobei die vorgegebenen Informationen der zweiten Inneneinheit (300) eine vorgegebene Innentemperatur, einen vorgegebenen Ist-Überhitzungsgrad und einen vorgegebenen Soll-Überhitzungsgrad beinhalten,
wobei die Inneninformationen der ersten Inneneinheit (100) eine Innentemperatur eines Raums, in dem die erste Inneneinheit (200) installiert ist, Soll-Temperatur und Einlasskältemittel-Temperatur und Auslasskältemittel-Temperatur eines ersten Innenwärmetauschers (210), der in der ersten Inneneinheit (200) bereitgestellt ist, umfassen und wobei die Außeninformationen eine von einem Außentemperaturdetektor (152) detektierte Außentemperatur und eine von einem Austrittstemperaturdetektor (151) detektierte Austrittstemperatur umfassen.

3. Steuerungsverfahren gemäß Anspruch 2, wobei die Steuerung der Öffnungsrate des zweiten durchflussratenanpassbaren Ventils (130) bei Solobetrieb der zweiten Inneneinheit (300) Folgendes umfasst:

Berechnen einer Soll-Austrittstemperatur basierend auf der Außentemperatur, vorgegebenen Frequenz des Verdichters (105) und vorgegebenen Innentemperatur;
Berechnen einer Austrittstemperaturdifferenz durch Vergleichen der Soll-Austrittstemperatur mit der detektierten Austrittstemperatur; und
Berechnen einer korrigierenden Öffnungsrate des zweiten durchflussratenanpassbaren Ventils (130) basierend auf der Austrittstemperaturdifferenz;

Berechnen einer ausgegebenen Öffnungsrate des zweiten durchflussratenanpassbaren Ventils (130) durch Summieren einer vorgespeicherten vorhergehenden Öffnungsrate des zweiten durchflussratenanpassbaren Ventils (130) und der korrigierenden Öffnungsrate des zweiten durchflussratenanpassbaren Ventils (130);

Steuern der Öffnungsrate des zweiten durchflussratenanpassbaren Ventils (130) nach der berechneten ausgegebenen Öffnungsrate; und

Speichern einer Ist-Soll-Austrittstemperatur und detektierten Austrittstemperatur zur anschließenden Berechnung der ausgegebenen Öffnungsrate des zweiten durchflussratenanpassbaren Ventils (130).

4.  Steuerungsverfahren gemäß Anspruch 2, wobei die Steuerung der Frequenz des Verdichters (105) bei gleichzeitigem Betrieb der ersten und zweiten Inneneinheit (200, 300) Folgendes umfasst:

    Summieren der Kapazitäten der ersten Inneneinheit (200) und der zweiten Inneneinheit (300); und

    Steuern der Frequenz des Verdichters (105) basierend auf der Summenkapazität und der Innentemperatur und Soll-Temperatur der ersten Inneneinheit (200), und

    wobei sich die eingestellte Frequenz des Verdichters (105) basierend auf der Veränderung der Innentemperatur verändert und die veränderte Frequenz an dem Verdichter (105) angewandt wird.

5.  Steuerungsverfahren gemäß Anspruch 4, wobei die Steuerung der Öffnungsraten des ersten und zweiten durchflussratenanpassbaren Ventils (125, 130) bei gleichzeitigem Betrieb der ersten und zweiten Inneneinheit (200, 300) Folgendes umfasst:

    Berechnen einer Soll-Austrittstemperatur basierend auf der detektierten Frequenz des Verdichters (105), Außentemperatur und von der ersten Inneneinheit (200) übertragenen Innentemperatur;

    Berechnen einer Austrittstemperaturdifferenz durch Vergleichen der Soll-Austrittstemperatur und der detektierten Austrittstemperatur;

    Berechnen eines Überhitzungsgrads des ersten Innenwärmetauschers (210) durch Vergleichen der Einlasskältemittel-Temperatur und Auslasskältemittel-Temperatur des ersten Innenwärmetauschers (210) miteinander;

    Steuern der Öffnungsrate des ersten durchflussratenanpassbaren Ventils (125) basierend auf der Austrittstemperaturdifferenz, detektierten Frequenz des Verdichters und Überhitzungsgrad des ersten Innenwärmetauschers (210); und

    Steuern der Öffnungsrate des zweiten durchflussratenanpassbaren Ventils (130) basierend auf der Austrittstemperaturdifferenz, detektierten Frequenz des Verdichters und vorgegebenem Überhitzungsgrad.

6.  Steuerungsverfahren gemäß Anspruch 5, wobei die Steuerung der Öffnungsraten des ersten und zweiten durchflussratenanpassbaren Ventils (125, 130) bei gleichzeitigem Betrieb der ersten und zweiten Inneneinheit (200, 300) Folgendes umfasst:

    Berechnen einer korrigierenden Öffnungsrate des ersten durchflussratenanpassbaren Ventils (125) basierend auf der Austrittstemperaturdifferenz, detektierten Frequenz des Verdichters (105) und Überhitzungsgrad des ersten Innenwärmetauschers (210);

    Berechnen einer ausgegebenen Öffnungsrate des ersten durchflussratenanpassbaren Ventils (125) durch Summieren einer vorgespeicherten vorhergehenden Öffnungsrate und korrigierenden Öffnungsrate des ersten durchflussratenanpassbaren Ventils (125);

    Steuern der Öffnungsrate des ersten durchflussratenanpassbaren Ventils (125) nach der berechneten ausgegebenen Öffnungsrate des ersten durchflussratenanpassbaren Ventils (125);

    Berechnen einer korrigierenden Öffnungsrate des zweiten durchflussratenanpassbaren Ventils (130) basierend auf der Austrittstemperaturdifferenz, detektierten Frequenz des Verdichters (105) und vorgegebenem Überhitzungsgrad;

    Berechnen einer ausgegebenen Öffnungsrate des zweiten durchflussratenanpassbaren Ventils (130) durch Summieren einer vorgespeicherten vorhergehenden Öffnungsrate und korrigierenden Öffnungsrate des zweiten durchflussratenanpassbaren Ventils (130);

    Steuern der Öffnungsrate des zweiten durchflussratenanpassbaren Ventils (130) nach der berechneten ausgegebenen Öffnungsrate des zweiten durchflussratenanpassbaren Ventils (130); und

    Speichern einer Ist-Frequenz des Verdichters (105), Soll-Austrittstemperatur und detektierten Austrittstemperatur zur anschließenden Berechnung der ausgegebenen Öffnungsraten des ersten und zweiten durchflussratenanpassbaren Ventils (125, 130).

7.  Steuerungsverfahren gemäß Anspruch 2, das ferner Folgendes beinhaltet:

falls die erste Inneneinheit allein betrieben wird,

Einstellen der Frequenz des Verdichters (105) basierend auf einer Soll-Temperatur und von der ersten Inneneinheit (200) übertragenen Innentemperatur;

Verändern der eingestellten Frequenz des Verdichters (105) basierend auf der Veränderung der Innentemperatur;

Anwenden der veränderten Frequenz an dem Verdichter (105); und

Steuern einer Öffnungsrate des ersten durchflussratenanpassbaren Ventils (125), um eine Durchflussrate eines an die erste Inneneinheit (200) zu speisenden Kältemittels basierend auf den Inneninformationen der ersten Inneneinheit (200) und der Frequenz des Verdichters (105) und den von der Außeneinheit (100) detektierten Außeninformationen anzupassen,

wobei die Steuerung der Öffnungsrate des ersten durchflussratenanpassbaren Ventils (125) bei Solobetrieb der ersten Inneneinheit (200) Folgendes umfasst:

Berechnen einer Soll-Austrittstemperatur basierend auf der detektierten Frequenz des Verdichters (105), detektierten Außentemperatur und Innentemperatur von der ersten Inneneinheit (200);

Berechnen einer Austrittstemperaturdifferenz durch Vergleichen der Soll-Austrittstemperatur mit der detektierten Ist-Austrittstemperatur;

Berechnen einer Frequenzdifferenz durch Vergleichen der detektierten Frequenz des Verdichters (105) mit der vorgespeicherten vorherigen Frequenz;

Berechnen einer Überhitzungsgraddifferenz des ersten Innenwärmetauschers (210) durch Vergleichen des Ist-Überhitzungsgrads des ersten Innenwärmetauschers (210) mit dem vorgegebenen Soll-Überhitzungsgrad des ersten Innenwärmetauschers (210);

Berechnen einer korrigierenden Öffnungsrate des ersten durchflussratenanpassbaren Ventils (125) basierend auf der berechneten Austrittstemperaturdifferenz, Frequenzdifferenz des Verdichters (105) und Überhitzungsgraddifferenz des ersten Innenwärmetauschers (210);

Berechnen einer ausgegebenen Öffnungsrate des ersten durchflussratenanpassbaren Ventils (125) durch Summieren der korrigierenden Öffnungsrate des ersten durchflussratenanpassbaren Ventils (125) und vorgespeicherten vorhergehenden Öffnungsrate;

Steuern der Öffnungsrate des ersten durchflussratenanpassbaren Ventils (125) nach der berechneten ausgegebenen Öffnungsrate; und

Speichern der detektierten Frequenz des Verdichters (105), Soll-Austrittstemperatur und detektierten Austrittstemperatur zur anschließenden Berechnung der ausgegebenen Öffnungsrate des zweiten durchflussratenanpassbaren Ventils (130).

8. Steuerungsverfahren gemäß Anspruch 1, das ferner das Betreiben des Verdichters (105) mit einer Startfrequenz für eine vorgegebene Einstellzeit, falls mindestens eine der ersten und zweiten Inneneinheit (200, 300) betrieben wird, und das Öffnen des ersten und zweiten durchflussratenanpassbaren Ventils (125, 130) nach vorgegebenen anfänglichen Öffnungsraten beinhaltet.

9. Eine Multiklimaanlage, die Folgendes beinhaltet:

eine erste Inneneinheit (200), die einen ersten Innenwärmetauscher (210), um Wärmetausch mit Innenluft eines ersten Innenraums durchzuführen, und einen Inneninformationsdetektor, um Inneninformationen zu detektieren, umfasst, wobei die erste Inneneinheit (200) eine Kommunikationsfunktion aufweist;

eine zweite Inneneinheit (300), die einen zweiten Innenwärmetauscher (310), um Wärmetausch mit Innenluft eines zweiten Innenraums durchzuführen, umfasst, wobei die zweite Inneneinheit (300) keine Kommunikationsfunktion aufweist; und

eine Außeneinheit, die einen Inverter-Typ-Verdichter (105), einen Außenwärmetauscher (110), ein erstes und zweites durchflussratenanpassbares Ventil (125, 130), um Durchflussraten eines an die erste und zweite Inneneinheit (200, 300) zu speisenden Kältemittels anzupassen, und einen Außeninformationsdetektor, um Außeninformationen zu detektieren, umfasst,

wobei die Außeneinheit (300) ferner eine Steuerung (163) umfasst, die ermisst, ob mindestens eine der ersten und zweiten Inneneinheit (200, 300) betrieben wird oder nicht, den Betrieb des Verdichters (105) mit einer vorgegebenen Frequenz bei Solobetrieb der zweiten Inneneinheit (300) steuert, eine variable Steuerung der Frequenz des Verdichters (105) basierend auf Inneninformationen der ersten Inneneinheit (200) bei gleichzeitigem Betrieb der ersten und zweiten Inneneinheit (200, 300) durchführt und eine Öffnungsrate des zweiten durchflussratenanpassbaren Ventils (130) basierend auf der Frequenz des Verdichters (105), vorgegebenen Inneninformationen der zweiten Inneneinheit (300), Außeninformationen und Inneninformationen der ersten Inneneinheit (200) bei Betrieb der zweiten Inneneinheit (300) steuert,

wobei die Außeneinheit (100) ferner einen Leistungsdetektor (162) umfasst, um Leistungs-Ein-/Aus-Signale von der zweiten Inneneinheit (300) zu detektieren, und

wobei die Steuerung (163) der Außeneinheit (100) ermisst, basierend auf den Leistungs-Ein-/Aus-Signalen, ob die zweite Inneneinheit (300) betrieben wird oder nicht.

10. Multiklimaanlage gemäß Anspruch 9, wobei die Außeneinheit ferner einen Frequenzdetektor (161) umfasst, um die Frequenz des Verdichters (105) zu detektieren,

wobei der Außeninformationsdetektor einen Austrittstemperaturdetektor (151), um eine Temperatur eines Kältemittels, das von dem Verdichter (105) austritt, zu detektieren, und einen Außentemperaturdetektor (152), um eine Außentemperatur zu detektieren, umfasst,

wobei der Inneninformationsdetektor der ersten Inneneinheit (200) einen Innentemperaturdetektor (233), um eine Innentemperatur zu detektieren, einen Einlasskältemittel-Temperaturdetektor (231), um eine Temperatur eines in den ersten Innenwärmetauscher eingeführten Kältemittels zu detektieren, und einen Auslasskältemittel-Temperaturdetektor (232), um eine Temperatur eines von dem ersten Innenwärmetauscher (210) austretenden Kältemittels zu detektieren, umfasst und

wobei die vorgegebenen Inneninformationen der zweiten Inneneinheit eine vorgegebene Innentemperatur, einen vorgegebenen Ist-Überhitzungsgrad des zweiten Wärmetauschers (310) und einen vorgegebenen Soll-Überhitzungsgrad des zweiten Wärmetauschers (310) umfassen.

11. Multiklimaanlage gemäß Anspruch 10, wobei, falls Solobetrieb der zweiten Inneneinheit (300) ermessen wird, die Steuerung (163) der Außeneinheit (100) eine Soll-Austrittstemperatur basierend auf der Außentemperatur, detektierten Frequenz des Verdichters (105) und vorgegebener Innentemperatur berechnet und die Öffnungsrate des zweiten durchflussratenanpassbaren Ventils (130) basierend auf der Soll-Austrittstemperatur, detektierten Austrittstemperatur, vorgegebenem Ist-Überhitzungsgrad des zweiten Innenwärmetauschers (310), vorgegebenen Soll-Überhitzungsgrad des zweiten Innenwärmetauschers (310) und vorgegebener Frequenz des Verdichters (105) steuert.

12. Multiklimaanlage gemäß Anspruch 10, wobei, falls Solobetrieb der ersten Inneneinheit (200) ermessen wird, die Steuerung (160) der Außeneinheit (100) eine Soll-Austrittstemperatur basierend auf der Außentemperatur, der detektierten Frequenz des Verdichters (105) und der von der ersten Inneneinheit (200) übertragenen Innentemperatur berechnet und eine Öffnungsrate des ersten durchflussratenanpassbaren Ventils (125) basierend auf der Soll-Austrittstemperatur, detektierten Austrittstemperatur, dem Überhitzungsgrad des ersten Innenwärmetauschers (210) entsprechend einer Differenz zwischen der Einlasskältemittel-Temperatur und der Auslasskältemittel-Temperatur, dem vorgegebenen Soll-Überhitzungsgrad des ersten Innenwärmetauschers (210) und der detektierten Frequenz des Verdichters (105) steuert.

13. Multiklimaanlage gemäß Anspruch 10, wobei, falls gleichzeitiger Betrieb der ersten und zweiten Inneneinheit (200, 300) ermessen wird, die Steuerung (163) der Außeneinheit (100) eine Soll-Austrittstemperatur basierend auf der Außentemperatur, der detektierten Frequenz des Verdichters (105) und der von der ersten Inneneinheit (200) übertragenen Innentemperatur berechnet, eine Öffnungsrate des ersten durchflussratenanpassbaren Ventils (125) basierend auf der Soll-Austrittstemperatur, detektierten Austrittstemperatur, dem Überhitzungsgrad des ersten Innenwärmetauschers (210) entsprechend einer Differenz zwischen der Einlasskältemittel-Temperatur und der Auslasskältemittel-Temperatur, dem vorgegebenen Soll-Überhitzungsgrad des ersten Innenwärmetauschers (210) und der detektierten Frequenz des Verdichters (105) steuert, die Öffnungsrate des zweiten durchflussratenanpassbaren Ventils (130) basierend auf der Soll-Austrittstemperatur, detektierten Austrittstemperatur, der detektierten Frequenz des Verdichters (105) und dem vorgegebenen Überhitzungsgrad der zweiten Inneneinheit (300) steuert und die Frequenz des Verdichters (105) basierend auf Kapazitäten der ersten und zweiten Inneneinheit (200, 300) und der von der ersten Inneneinheit (200) übertragenen Innentemperatur variabel steuert.

14. Multiklimaanlage gemäß Anspruch 13, wobei die Außeneinheit (100) ferner eine Speichereinheit (168) umfasst, die die vorgegebenen Inneninformationen der zweiten Inneneinheit (300), die vorgegebene Frequenz des Verdichters (105), die detektierte Frequenz des Verdichters (105), die Soll-Austrittstemperatur, die detektierte Austrittstemperatur und die Öffnungsraten des ersten und zweiten durchflussratenanpassbaren Ventils (125, 130) speichert.

**Revendications**

1. Procédé de commande d'un climatiseur multiple, comprenant une unité extérieure (100) comportant un compresseur de type inverseur (105), un échangeur de chaleur extérieur (110) et un détecteur de puissance (162), et une pluralité d'unités intérieures comportant chacune un échangeur de chaleur intérieur (210, 310), ledit détecteur de puissance (162) étant configuré pour détecter des signaux de mise sous/hors tension d'une seconde unité intérieure de ladite pluralité d'unités intérieures,

   le procédé consistant à :

   juger si, parmi la pluralité d'unités intérieures (200, 300), une première unité intérieure (200), qui communique avec l'unité extérieure (100), et ladite seconde unité intérieure (300), qui ne communique pas avec l'unité extérieure (100), sont respectivement en fonctionnement ;

   commander l'entraînement du compresseur (105) à une fréquence prédéterminée et commander une vitesse d'ouverture d'une seconde vanne réglable en débit (130) pour régler un débit d'un fluide frigorigène à fournir à la seconde unité intérieure (300) sur la base d'une fréquence prédéterminée du compresseur (105), d'une information d'intérieur prédéterminée de la seconde unité intérieure (300) et d'une information d'extérieur détectée par l'unité extérieure (100), si un fonctionnement en solo de la seconde unité intérieure (300) est jugé ; et

   commander une fréquence du compresseur (105) sur la base de capacités des première et seconde unités intérieures (200, 300) et d'une information d'intérieur transmise depuis la première unité intérieure (200), et commander des vitesses d'ouverture de première et seconde vannes réglables en débit (125, 130), respectivement, pour régler des débits d'un fluide frigorigène à fournir aux première et seconde unités intérieures (200, 300) sur la base d'une information d'intérieur de la première unité intérieure (200), de la fréquence du compresseur (105) et d'une information d'extérieur détectées par l'unité extérieure (100) et d'une information d'intérieur prédéterminée de la seconde unité intérieure (300), si un fonctionnement simultané des première et seconde unités intérieures (125, 130) est jugé,

   le jugement de si la seconde unité intérieure (300) est ou non en fonctionnement consistant à juger si une commande de fonctionnement de la seconde unité intérieure (300) est entrée ou non en détectant un signal de mise sous tension appliqué à la seconde unité intérieure (300) par l'intermédiaire du détecteur de puissance (162).

2. Procédé de commande selon la revendication 1, dans lequel l'information prédéterminée de la seconde unité intérieure (300) inclut une température intérieure prédéterminée, un degré de surchauffe actuel prédéterminé et un degré de surchauffe cible prédéterminé,

   l'information d'intérieur de la première unité intérieure (100) incluant une température intérieure d'un espace où est installée la première unité intérieure (200), une température cible et une température d'entrée de fluide frigorigène et une température de sortie de fluide frigorigène d'un premier échangeur de chaleur intérieur (210) qui est situé dans la première unité intérieure (200), et

   l'information d'extérieur incluant une température extérieure détectée par un détecteur de température extérieure (152) et une température de refoulement détectée par un détecteur de température de refoulement (151).

3. Procédé de commande selon la revendication 2, dans lequel la commande de la vitesse d'ouverture de la seconde vanne réglable en débit (130) au moment du fonctionnement en solo de la seconde unité intérieure (300) consiste à :

   calculer une température de refoulement cible sur la base de la température extérieure, de la fréquence prédéterminée du compresseur (105) et de la température intérieure prédéterminée ;

   calculer une différence de température de refoulement en comparant la température de refoulement cible à la température de refoulement détectée ; et

   calculer une vitesse d'ouverture corrective de la seconde vanne réglable en débit (130) sur la base de la différence de température de refoulement ;

   calculer une vitesse d'ouverture de sortie de la seconde vanne réglable en débit (130) en additionnant une vitesse d'ouverture précédente stockée au préalable de la seconde vanne réglable en débit (130) et la vitesse d'ouverture corrective de la seconde vanne réglable en débit (130) ;

   commander la vitesse d'ouverture de la seconde vanne réglable en débit (130) selon la vitesse d'ouverture de sortie calculée ; et

   stocker une température de refoulement cible actuelle et une température de refoulement détectée pour un calcul ultérieur de la vitesse d'ouverture de sortie de la seconde vanne réglable en débit (130).

4. Procédé de commande selon la revendication 2, dans lequel la commande de la fréquence du compresseur (105) au moment du fonctionnement simultané des première et seconde unités intérieures (200, 300) consiste à :

additionner des capacités de la première unité intérieure (200) et de la seconde unité intérieure (300) ; et
commander la fréquence du compresseur (105) sur la base de la capacité additionnée et de la température intérieure et de la température cible de la première unité intérieure (200), et
la fréquence de consigne du compresseur (105) variant sur la base d'une variation de la température intérieure, et la fréquence variée étant appliquée au compresseur (105).

5. Procédé de commande selon la revendication 4, dans lequel la commande des vitesses d'ouverture des première et seconde vannes réglables en débit (125, 130) au moment du fonctionnement simultané des première et seconde unités intérieures (200, 300) consiste à :

calculer une température de refoulement cible sur la base de la fréquence détectée du compresseur (105), de la température extérieure et de la température intérieure transmise depuis la première unité intérieure (200) ;
calculer une différence de température de refoulement en comparant la température de refoulement cible et la température de refoulement détectée ;
calculer un degré de surchauffe du premier échangeur de chaleur intérieur (210) en comparant mutuellement la température d'entrée de fluide frigorigène et la température de sortie de fluide frigorigène du premier échangeur de chaleur intérieur (210) ;
commander la vitesse d'ouverture de la première vanne réglable en débit (125) sur la base de la différence de température de refoulement, de la fréquence détectée du compresseur et du degré de surchauffe du premier échangeur de chaleur intérieur (210) ; et
commander la vitesse d'ouverture de la seconde vanne réglable en débit (130) sur la base de la différence de température de refoulement, de la fréquence détectée du compresseur et du degré de surchauffe prédéterminé.

6. Procédé de commande selon la revendication 5, dans lequel la commande des vitesses d'ouverture des première et seconde vannes réglables en débit (125, 130) au moment du fonctionnement simultané des première et seconde unités intérieures (200, 300) consiste à :

calculer une vitesse d'ouverture corrective de la première vanne réglable en débit (125) sur la base de la différence de température de refoulement, de la fréquence détectée du compresseur (105) et du degré de surchauffe du premier échangeur de chaleur intérieur (210) ;
calculer une vitesse d'ouverture de sortie de la première vanne réglable en débit (125) en additionnant une vitesse d'ouverture précédente stockée au préalable et la vitesse d'ouverture corrective de la première vanne réglable en débit (125) ;
commander la vitesse d'ouverture de la première vanne réglable en débit (125) selon la vitesse d'ouverture de sortie calculée de la première vanne réglable en débit (125) ;
calculer une vitesse d'ouverture corrective de la seconde vanne réglable en débit (130) sur la base de la différence de température de refoulement, de la fréquence détectée du compresseur (105) et du degré de surchauffe prédéterminé ;
calculer une vitesse d'ouverture de sortie de la seconde vanne réglable en débit (130) en additionnant une vitesse d'ouverture précédente stockée au préalable et la vitesse d'ouverture corrective de la seconde vanne réglable en débit (130) ;
commander la vitesse d'ouverture de la seconde vanne réglable en débit (130) selon la vitesse d'ouverture de sortie calculée de la seconde vanne réglable en débit (130) ; et
stocker une fréquence actuelle du compresseur (105), une température de refoulement cible et une température de refoulement détectée pour un calcul ultérieur des vitesses d'ouverture de sortie des première et seconde vannes réglables en débit (125, 130).

7. Procédé de commande selon la revendication 2, consistant en outre à :

si seule la première unité intérieure est en fonctionnement,
consigner la fréquence du compresseur (105) sur la base d'une température cible et d'une température intérieure transmise depuis la première unité intérieure (200) ;
faire varier la fréquence de consigne du compresseur (105) sur la base d'une variation de la température intérieure ;
appliquer la fréquence variée au compresseur (105) ; et
commander une vitesse d'ouverture de la première vanne réglable en débit (125) pour régler un débit d'un fluide frigorigène à fournir à la première unité intérieure (200) sur la base de l'information d'intérieur de la première unité intérieure (200) et de la fréquence du compresseur (105) et de l'information d'extérieur détectées par l'unité extérieure (100),

la commande de la vitesse d'ouverture de la première vanne réglable en débit (125) au moment du fonctionnement en solo de la première unité intérieure (200) consistant à :

calculer une température de refoulement cible sur la base de la fréquence détectée du compresseur (105), de la température extérieure détectée et de la température intérieure en provenance de la première unité intérieure (200) ;
calculer une différence de température de refoulement en comparant la température de refoulement cible à la température de refoulement actuelle détectée ;
calculer une différence de fréquence en comparant la fréquence détectée du compresseur (105) à la fréquence précédente stockée au préalable ;
calculer une différence de degré de surchauffe du premier échangeur de chaleur intérieur (210) en comparant le degré de surchauffe actuel du premier échangeur de chaleur intérieur (210) au degré de surchauffe cible prédéterminé du premier échangeur de chaleur intérieur (210) ;
calculer une vitesse d'ouverture corrective de la première vanne réglable en débit (125) sur la base de la différence de température de refoulement calculée, de la différence de fréquence du compresseur (105) et de la différence de degré de surchauffe du premier échangeur de chaleur intérieur (210) ;
calculer une vitesse d'ouverture de sortie de la première vanne réglable en débit (125) en additionnant la vitesse d'ouverture corrective de la première vanne réglable en débit (125) et la vitesse d'ouverture précédente prédéterminée ;
commander la vitesse d'ouverture de la première vanne réglable en débit (125) selon la vitesse d'ouverture de sortie calculée ; et
stocker la fréquence détectée du compresseur (105), la température de refoulement cible et la température de refoulement détectée pour un calcul ultérieur de la vitesse d'ouverture de sortie de la seconde vanne réglable en débit (130).

8. Procédé de commande selon la revendication 1, consistant en outre à faire fonctionner le compresseur (105) à une fréquence de départ pendant une durée de consigne prédéterminée si au moins une des première et seconde unités intérieures (200, 300) est en fonctionnement, et ouvrir les première et seconde vannes réglables en débit (125, 130) selon des vitesses d'ouverture initiales prédéterminées.

9. Climatiseur multiple, comprenant :

une première unité intérieure (200) comprenant un premier échangeur de chaleur intérieur (210) pour réaliser un échange de chaleur avec de l'air intérieur d'un premier espace intérieur, et un détecteur d'information d'intérieur pour détecter une information d'intérieur, la première unité intérieure (200) ayant une fonction de communication ;
une seconde unité intérieure (300) comprenant un second échangeur de chaleur intérieur (310) pour réaliser un échange de chaleur avec de l'air intérieur d'un second espace intérieur, la seconde unité intérieure (300) n'ayant pas de fonction de communication ; et
une unité extérieure comprenant un compresseur de type inverseur (105), un échangeur de chaleur extérieur (110), des première et seconde vannes réglables en débit (125, 130) pour régler des débits d'un fluide frigorigène à fournir aux première et seconde unités intérieures (200, 300), et un détecteur d'information d'extérieur pour détecter une information d'extérieur,
l'unité extérieure (300) comprenant en outre un contrôleur (163) qui juge si au moins une des première et seconde unités intérieures (200, 300) est ou non en fonctionnement, qui commande le fonctionnement du compresseur (105) à une fréquence prédéterminée au moment du fonctionnement en solo de la seconde unité intérieure (300), qui réalise une commande variable de la fréquence du compresseur (105) sur la base d'une information d'intérieur de la première unité intérieure (200) au moment du fonctionnement simultané des première et seconde unités intérieures (200, 300), et qui commande une vitesse d'ouverture de la seconde vanne réglable en débit (130) sur la base de la fréquence du compresseur (105), de l'information d'intérieur prédéterminée de la seconde unité intérieure (300), de l'information d'extérieur et de l'information d'intérieur de la première unité intérieure (200) au moment du fonctionnement de la seconde unité intérieure (300),
l'unité extérieure (100) comprenant en outre un détecteur de puissance (162) pour détecter des signaux de mise sous/hors tension de la seconde unité intérieure (300), et

le contrôleur (163) de l'unité extérieure (100) jugeant, sur la base des signaux de mise sous/hors tension, si la seconde unité intérieure (300) est ou non en fonctionnement.

10. Climatiseur multiple selon la revendication 9, dans lequel l'unité extérieure comprend en outre un détecteur de fréquence (161) pour détecter la fréquence du compresseur (105),

dans lequel le détecteur d'information d'extérieur comprend un détecteur de température de refoulement (151) pour détecter une température d'un fluide frigorigène refoulé par le compresseur (105) et un détecteur de température extérieure (152) pour détecter une température extérieure,

dans lequel le détecteur d'information d'intérieur de la première unité intérieure (200) comprend un détecteur de température intérieure (233) pour détecter une température intérieure, un détecteur de température d'entrée de fluide frigorigène (231) pour détecter une température d'un fluide frigorigène introduit dans le premier échangeur de chaleur intérieur, et un détecteur de température de sortie de fluide frigorigène (232) pour détecter une température d'un fluide frigorigène refoulé par le premier échangeur de chaleur intérieur (210), et

dans lequel l'information d'intérieur prédéterminée de la seconde unité intérieure inclut une température d'intérieur prédéterminée, un degré de surchauffe actuel prédéterminé du second échangeur de chaleur (310) et un degré de surchauffe cible prédéterminé du second échangeur de chaleur (310).

11. Climatiseur multiple selon la revendication 10, dans lequel, si un fonctionnement en solo de la seconde unité intérieure (300) est jugé, le contrôleur (163) de l'unité extérieure (100) calcule une température de refoulement cible sur la base de la température extérieure, de la fréquence détectée du compresseur (105) et de la température intérieure prédéterminée, et commande la vitesse d'ouverture de la seconde vanne réglable en débit (130) sur la base de la température de refoulement cible, de la température de refoulement détectée, du degré de surchauffe actuel prédéterminé du second échangeur de chaleur intérieur (310), du degré de surchauffe cible prédéterminé du second échangeur de chaleur intérieur (310) et de la fréquence prédéterminée du compresseur (105).

12. Climatiseur multiple selon la revendication 10, dans lequel, si un fonctionnement en solo de la première unité intérieure (200) est jugé, le contrôleur (160) de l'unité extérieure (100) calcule une température de refoulement cible sur la base de la température extérieure, de la fréquence détectée du compresseur (105) et de la température intérieure transmise depuis la première unité intérieure (200), et commande une vitesse d'ouverture de la première vanne réglable en débit (125) sur la base de la température de refoulement cible, de la température de refoulement détectée, du degré de surchauffe du premier échangeur de chaleur intérieur (210) correspondant à une différence entre la température d'entrée de fluide frigorigène et la température de sortie de fluide frigorigène, du degré de surchauffe cible prédéterminé du premier échangeur de chaleur intérieur (210) et de la fréquence détectée du compresseur (105).

13. Climatiseur multiple selon la revendication 10, dans lequel, si un fonctionnement simultané des première et seconde unités intérieures (200, 300) est jugé, le contrôleur (163) de l'unité extérieure (100) calcule une température de refoulement cible sur la base de la température extérieure, de la fréquence détectée du compresseur (105) et de la température intérieure transmise depuis la première unité intérieure (200), commande une vitesse d'ouverture de la première vanne réglable en débit (125) sur la base de la température de refoulement cible, de la température de refoulement détectée, du degré de surchauffe du premier échangeur de chaleur intérieur (210) correspondant à une différence entre la température d'entrée de fluide frigorigène et la température de sortie de fluide frigorigène, du degré de surchauffe cible prédéterminé du premier échangeur de chaleur intérieur (210) et de la fréquence détectée du compresseur (105), commande la vitesse d'ouverture de la seconde vanne réglable en débit (130) sur la base de la température de refoulement cible, de la température de refoulement détectée, de la fréquence détectée du compresseur (105) et du degré de surchauffe prédéterminé de la seconde unité intérieure (300), et commande de manière variable la fréquence du compresseur (105) sur la base de capacités des première et seconde unités intérieures (200, 300) et de la température intérieure transmise depuis la première unité intérieure (200).

14. Climatiseur multiple selon la revendication 13, dans lequel l'unité extérieure (100) comprend en outre une unité de stockage (168) qui stocke l'information d'intérieur prédéterminée de la seconde unité intérieure (300), la fréquence prédéterminée du compresseur (105), la fréquence détectée du compresseur (105), la température de refoulement cible, la température de refoulement détectée et les vitesses d'ouverture des première et seconde vannes réglables en débit (125, 130).

FIG. 1

FIG. 2

FIG. 3

# FIG. 4

START

510 — CONFIRM WHETHER OR NOT OPERATING COMMAND IS INPUT FROM AT LEAST ONE INDOOR UNIT

520 — DRIVE COMPRESSOR AT STARTING FREQUENCY

530 — OPEN FIRST AND SECOND FLOW-RATE ADJUSTABLE VALVES TO INITIAL OPENING RATES

540 — PREDETERMINED TIME PASSED?

NO

YES

550 — JUDGE INDOOR UNIT THAT IS BEING OPERATED

560 — CONTROL FREQUENCY OF COMPRESSOR

570 — CONTROL OPENING RATE OF EACH OF FIRST AND SECOND FLOW-RATE ADJUSTABLE VALVES BASED ON TARGET DISCHARGE TEMPERATURE, DETECTED CURRENT DISCHARGE TEMPERATURE AND FREQUENCY OF COMPRESSOR

END

# FIG. 5

## FIG. 6

START

550

551
IS SECOND INDOOR UNIT IN OFF STATE?

552 (YES)
JUDGE OPERATION OF FIRST INDOOR UNIT

553
IS FIRST INDOOR UNIT IN OFF STATE?
NO

554 (YES)
JUDGE OPERATION OF SECOND INDOOR UNIT

555
JUDGE OPERATION OF FIRST AND SECOND INDOOR UNITS

271a
CALCULATE TARGET DISCHARGE TEMPERATURE BASED ON DETECTED FREQUENCY OF COMPRESSOR, DETECTED INDOOR TEMPERATURE, AND DETECTED OUTDOOR TEMPERATURE

272a
CALCULATE TARGET DISCHARGE TEMPERATURE BASED ON PREDETERMINED FREQUENCY OF COMPRESSOR, PREDETERMINED INDOOR TEMPERATURE AND DETECTED OUTDOOR TEMPERATURE

273a
CALCULATE TARGET DISCHARGE TEMPERATURE BASED ON DETECTED FREQUENCY OF COMPRESSOR, DETECTED INDOOR TEMPERATURE, AND DETECTED OUTDOOR TEMPERATURE

271b
CALCULATE CORRECTIVE OPENING RATE OF FIRST FLOW-RATE ADJUSTABLE VALVE BASED ON TARGET DISCHARGE TEMPERATURE, DETECTED DISCHARGE TEMPERATURE, DETECTED FREQUENCY OF COMPRESSOR AND DETECTED OVERHEATING DEGREE OF FIRST INDOOR UNIT

272b
CALCULATE CORRECTIVE OPENING RATE OF SECOND FLOW-RATE ADJUSTABLE VALVE BASED ON TARGET DISCHARGE TEMPERATURE, DETECTED DISCHARGE TEMPERATURE, PREDETERMINED FREQUENCY OF COMPRESSOR AND PREDETERMINED OVERHEATING DEGREE

273b
CALCULATE CORRECTIVE OPENING RATE OF EACH OF FIRST AND SECOND FLOW-RATE ADJUSTABLE VALVES BASED ON TARGET DISCHARGE TEMPERATURE, DETECTED DISCHARGE TEMPERATURE, DETECTED FREQUENCY OF COMPRESSOR, DETECTED OVERHEATING DEGREE OF FIRST INDOOR UNIT AND PREDETERMINED OVERHEATING DEGREE OF SECOND INDOOR UNIT

271c
CALCUATE OUTPUT OPENING RATE OF FIRST FLOW-RATE ADJUSTABLE VALVE BY SUMMING CORRECTIVE OPENING RATE AND PREVIOUS OPENING RATE OF FIRST FLOW-RATE ADJUSTABLE VALVE

272c
CALCULATE OUTPUT OPENING RATE OF SECOND FLOW-RATE ADJUSTABLE VALVE BY SUMMING CORRECTIVE OPENING RATE AND PREVIOUS OPENING RATE OF SECOND FLOW-RATE ADJUSTABLE VALVE

273c
CALCULATE OUTPUT OPENING RATE OF FIRST FLOW-RATE ADJUSTABLE VALVE BY SUMMING CORRECTIVE OPENING RATE AND PREVIOUS OPENING RATE OF FIRST FLOW-RATE ADJUSTABLE VALVE, AND CALCUATE OUTPUT OPENING RATE OF SECOND FLOW-RATE ADJUSTABLE VALVE BY SUMMING CORRECTIVE OPENING RATE AND PREVIOUS OPENING RATE OF SECOND FLOW-RATE ADJUSTABLE VALVE

271d
ADJUST OPENIGN RATE OF FIRST FLOW-RATE ADJUSTABLE VALVE TO OUTPUT OPENING RATE AND CLOSE SECOND FLOW RATE ADJUSTBALE VALVE

272d
ADJUST OPENIGN RATE OF SECOND FLOW-RATE ADJUSTABLE VALVE TO OUTPUT OPENING RATE AND CLOSE FIRST FLOW RATE ADJUSTBALE VALVE

273d
ADJUST OPENIGN RATE OF FIRST FLOW-RATE ADJUSTABLE VALVE TO OUTPUT OPENING RATE AND ADJUST OPENIGN RATE OF SECOND FLOW-RATE ADJUSTABLE VALVE TO OUTPUT OPENING RATE

END

FIG. 7

**REFERENCES CITED IN THE DESCRIPTION**

**Patent documents cited in the description**

- EP 1091178 A